(19) Europäisches Patentamt / European Patent Office / Office européen des brevets

(11) **EP 4 180 485 A1**

(12) **EUROPEAN PATENT APPLICATION**
published in accordance with Art. 153(4) EPC

(43) Date of publication:
**17.05.2023 Bulletin 2023/20**

(21) Application number: **21837139.1**

(22) Date of filing: **08.07.2021**

(51) International Patent Classification (IPC):
**C08K 7/10** (2006.01)

(52) Cooperative Patent Classification (CPC):
**B22F 1/00; B22F 3/00; C08J 5/18; C08K 3/01;
C08K 7/10; C08L 77/00; C08L 101/00; H01F 1/147;
H01F 1/26**

(86) International application number:
**PCT/JP2021/025806**

(87) International publication number:
**WO 2022/009956 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.07.2020 JP 2020119367**

(71) Applicants:
• **Toyo Ink SC Holdings Co., Ltd.**
**Tokyo 104-0031 (JP)**
• **TOYOCOLOR CO., LTD.**
**Tokyo, 104-0031 (JP)**

(72) Inventors:
• **MASUDA Keisuke**
**Tokyo 104-0031 (JP)**
• **YANAGISAWA Makoto**
**Tokyo 104-0031 (JP)**
• **FUKUHARA Koichiro**
**Tokyo 104-0031 (JP)**
• **GONDO Ryosuke**
**Tokyo 104-0031 (JP)**

(74) Representative: **Becker, Eberhard
Becker Kurig & Partner
Patentanwälte mbB
Bavariastraße 7
80336 München (DE)**

(54) **MAGNETIC RESIN COMPOSITION FOR INJECTION MOLDING, AND INJECTION MOLDED
BODY FOR MAGNETIC SHIELDS**

(57) The present invention provides: a magnetic resin composition for injection molding, said magnetic resin composition exhibiting excellent moldability and having high relative magnetic permeability even after injection molding; and an injection molded body for magnetic shields. A magnetic resin composition according to the present invention uses, as magnetic particles (B), scale-like particles that are formed of an Fe-Si-Al alloy, and has a mass ratio of a thermoplastic resin (A) that has a melting point of from 100°C to 400°C to the Fe-Si-Al alloy of from 10/90 to 15/85; and a cross-sectional surface (52) in the thickness direction of a sheet (50) that is formed from this magnetic resin composition (1) satisfies the conditions (1) and (2) described below. (1) The total area of the magnetic particles (B) subjected to image processing is from 40% to 65% of the area of the image processing region. (2) The number of the magnetic particles (B) subjected to image processing is from 200 to 500.

FIG. 2A

**Description**

[Technical Field]

The present invention relates to a magnetic resin composition containing a thermoplastic resin and magnetic particles. The present invention also relates to a magnetic shield sheet and a molded body formed from the magnetic resin composition.

[Background Art]

In recent years, the development of wireless power transmission systems using magnetic field resonance type contactless power transmission has been vigorously pursued. For example, Patent Literature 1 proposes wireless charging for charging a vehicle battery, in which power is transmitted between a power supply (power transmission) coil on the road surface and a power reception coil on the vehicle side. In this method, a power supply coil and a power reception coil are disposed facing each other at a predetermined distance from each other, and power is transmitted by causing the power reception coil to resonate with the magnetic field vibration generated by the power supply coil. This method has an advantage of being able to extend the transmission distance compared to the power transmission type using electromagnetic induction between coils.

During power supply, a plurality of power reception coils is arranged near the upper surface of the power supply coil and receives power transmitted from the power supply coil. At this time, a magnetic body is installed between the power reception coil and the device to which the power is supplied from the vehicle such that the magnetic flux from the power supply coil does not cause malfunction of electronic circuits or the like installed inside the vehicle. As this magnetic body, a sheet obtained by kneading soft magnetic powder into a sheet made of silicon or other rubber is known.

As such a magnetic body, Patent Literature 2 discloses a magnetic body in which flat magnetic powder is dispersed in an insulating material and of which a complex magnetic permeability and loss tangent are within specific ranges. In the examples of the same literature, a magnetic body is disclosed in which permalloy, which is a flat magnetic powder, is added to an epoxy resin having a solid content proportion of 40%, and the obtained mixture is formed into a film by a doctor blade method.

Patent Literature 3 discloses an electromagnetic wave absorbing material containing a specific graphite as a dielectric constant adjuster together with a dielectric and/or a magnetic body. Examples 7 to 9 of the same Literature disclose a 100 $\mu$m thick sheet-like electromagnetic wave absorbing material, which is formed by a bar coater, after preparing a paint containing a hydrogenated acrylonitrile butadiene rubber, a flat soft magnetic body, graphite or carbon black, a solvent, and the like.

Further, with the objective of providing a coating film that can be formed by a simple process of coating and has excellent magnetic shielding properties, Patent Literature 4 discloses a coating film that contains a binder and a magnetic filler and satisfies the following conditions (1) and (2).

Condition (1): Three parallel straight lines extending in the film thickness direction are drawn every 3.0 $\mu$m in a cross-sectional photograph of the coating film in the film thickness direction captured by a scanning electron microscope, and for each straight line, when the reference number per 1 $\mu$m of straight line is calculated by counting the number of pieces of magnetic filler of which the longest length in the cross-sectional photograph is 1.0 $\mu$m or more that intersect the straight line and dividing this number by the length of the straight line, the average value of the reference numbers on the three straight lines is 0.15 or more (pieces/$\mu$m).

Condition (2): A cross-sectional photograph of the coating film in the film thickness direction captured by a scanning electron microscope is provided with a measurement region formed by connecting 100 unit regions of 3 $\mu$m square, and when the area occupied by the binder is measured for each unit region, the number of unit regions, in which the proportion of the area occupied by the binder to the unit region is 50% or more, is 50 or less.

In the example of Patent Literature 4, a paint containing urethane resin, Sendust, a dispersant, a solvent, and the like (non-volatile component 45%, viscosity 5.0 dPa·s) is obtained, and this paint is made into a coating film (200 $\mu$m thick) with a spray gun.

With the objective of providing a method for preventing deterioration of properties due to aging, Patent Literature 5 discloses a method of surface-treating a flat soft magnetic powder with a coupling agent, forming a film by a wet method using chlorinated polyethylene as a binding agent, and pressing the composite magnetic body which is film-formed with an elastic roll.

[Citation List]

[Patent Literature]

[Patent Literature 1]
Japanese Patent Laid-Open No. 2020-036389
[Patent Literature 2]
Japanese Patent Laid-Open No. 2012-134463
[Patent Literature 3]
Japanese Patent Laid-Open No. 2004-336028
[Patent Literature 4]
Japanese Patent Laid-Open No. 2016-21490
[Patent Literature 5]
Japanese Patent Laid-Open No. 2000-243615

[Summary of Invention]

[Technical Problem]

Permalloy used in the examples of Patent Literature 2 is a nickel-iron alloy, and is known as a material having high magnetic permeability, as can be seen from the name of an alloy exhibiting excellent magnetic permeability. In addition, permalloy exhibits excellent rollability and forgeability, and also exhibits excellent processability.

For the development of a wireless power transmission system using magnetic field resonance type contactless power transmission, it is essential to enhance the magnetic shielding effect of a magnetic body, and thus better magnetic bodies are required. Fe-Si-Al alloys represented by Sendust are known as materials of which magnetic permeability exceeds that of permalloy. However, while Fe-Si-Al alloys such as Sendust are excellent as high magnetic permeability materials, they are brittle materials with high hardness and poor plastic processability. Therefore, it is difficult to apply rolling or forging, it is not possible to obtain moldability similar to permalloy, there is a problem that magnetic permeability decreases when the alloy is dispersed in an insulating material, and thus, for example, a method of obtaining a coating film by a coating process as described in Patent Literature 4, and a method of obtaining a composite magnetic body by performing coating by a wet method and forming a film with an elastic roll as described in Patent Literature 5 have been proposed.

In addition, the above problem is not limited to wireless power transmission systems for vehicles, and similar problems may arise in general applications that require magnetic shielding properties.

The present invention has been made in view of the above problems, and an objective thereof is to provide a magnetic resin composition using an Fe-Si-Al alloy exhibiting excellent moldability and having high relative magnetic permeability even after injection molding, and a molded body such as a magnetic shield sheet formed by using the composition.

Furthermore, an objective of the present invention is to provide a magnetic resin composition for injection molding using an Fe-Si-Al alloy exhibiting excellent moldability and having high relative magnetic permeability, and an injection molded body for magnetic shields formed by using the composition.

[Solution to Problem]

As a result of extensive studies, the present inventors have found that the following aspects can solve the problems of the present invention, and have completed the present invention.

[1]: A magnetic resin composition for injection molding containing a thermoplastic resin (A) that has a melting point of 100°C to 400°C and magnetic particles (B), in which as the magnetic particles (B), scale-like particles that are formed of an Fe-Si-Al alloy are used, and a mass ratio of the thermoplastic resin (A) to the Fe-Si-Al alloy, that is, thermoplastic resin (A)/Fe-Si-Al alloy is 10/90 to 15/85, and conditions (1) and (2) described below are satisfied when, in order to form the magnetic resin composition into a shape of a sheet, the sheet is prepared by uniformly applying a pressure of 15 MPa from above one main surface side of a sheet to be formed over 1 minute at a temperature of the melting point of the thermoplastic resin (A) + 15°C, and a region with a length of 0.125 mm and a thickness of 0.090 mm in a cross-sectional surface in a thickness direction of the sheet is subjected to image processing with a micrograph at a magnification of 2500.

(1) A total area of the magnetic particles (B) subjected to image processing is 40% to 65% of the area of the image processing region.

(2) The number of the magnetic particles (B) subjected to image processing is 200 to 500.

[2]: The magnetic resin composition for injection molding according to [1], in which a silicon compound is deposited on at least a part of a surface layer of the magnetic particles (B).

[3] : The magnetic resin composition for injection molding according to [1] or [2], in which the thermoplastic resin (A) contains a polyamide resin.

[4]: The magnetic resin composition for injection molding according to any one of [1] to [3], further containing an antioxidant.

[5]: The magnetic resin composition for injection molding according to any one of [1] to [4], further containing a metal deactivator.

[6]: The magnetic resin composition for injection molding according to any one of [1] to [5], further containing a lubricant.

[7]: An injection molded body for magnetic shields containing a thermoplastic resin (A) that has a melting point of 100°C to 400°C and magnetic particles (B), including: an injection molded body of a magnetic resin composition in which, as the magnetic particles (B), scale-like particles that are formed of an Fe-Si-Al alloy are used, and a mass ratio of the thermoplastic resin (A) to the Fe-Si-Al alloy, that is, thermoplastic resin (A)/Fe-Si-Al alloy is 10/90 to 15/85; a sheet-like part provided at least at a part thereof; and a surface that satisfies conditions (3) and (4) described below when a region with a length of 0.125 mm and a thickness of 0.090 mm is subjected to image processing with a micrograph at a magnification of 2500 in a cross-sectional surface in a thickness direction of the sheet-like part.

(3) A total area of the magnetic particles (B) subjected to image processing is 40% to 65% of the area of the image processing region.

(4) The number of the magnetic particles (B) subjected to image processing is 200 to 500.

[8]: The injection molded body for magnetic shields according to [7], in which a silicon compound is deposited on at least a part of a surface layer of the magnetic particles (B).

[9]: The injection molded body for magnetic shields according to [7] or [8], in which the thermoplastic resin (A) contains a polyamide resin.

[10]: The injection molded body for magnetic shields according to any one of [7] to [9], further containing a lubricant (C).

[11]: The injection molded body for magnetic shields according to any one of [7] to [10], in which the sheet-like part has an average thickness of 0.8 to 10 mm.

[12] An injection molded body for magnetic shields, which is formed by using the magnetic resin composition according to any one of [1] to [6].

[Advantageous Effects of Invention]

According to the present invention, an excellent effect that there are provided a magnetic resin composition using an Fe-Si-Al alloy exhibiting excellent moldability and having high relative magnetic permeability even after injection molding, and a molded body such as a magnetic shield sheet formed by using the composition can be provided.

Further, according to the present invention, an excellent effect that a magnetic resin composition for injection molding using an Fe-Si-Al alloy exhibiting excellent moldability and having high relative magnetic permeability, and an injection molded body for magnetic shields formed by using the composition can be provided.

[Brief Description of Drawings]

Fig. 1A is a schematic explanatory view of a method for forming a sheet of a magnetic resin composition according to a first embodiment.

Fig. 1B is a schematic perspective view of a sheet formed by using the magnetic resin composition according to the first embodiment.

Fig. 1C is a sectional view taken along Ic-Ic of Fig. 1B.

Fig. 2A is a schematic perspective view of a magnetic shield sheet according to the first embodiment.

Fig. 2B is a sectional view taken along IIb-IIb of Fig. 2A.

Fig. 3 is a micrograph of a sheet formed by using a magnetic resin composition of Example 3.

Fig. 4 is a micrograph of a sheet formed by using a magnetic resin composition of Comparative Example 2.

Fig. 5 is a diagram plotting a retention rate of relative magnetic permeability with respect to hot water immersion time of the sheet according to the present example.

[Description of Embodiments]

An example of an embodiment to which the present invention is applied will be described below. However, the present invention is not limited to the above-described embodiments and modification examples, and other embodiments may also belong to the scope of the present invention as long as they match the gist of the present invention. In addition, the embodiments and modification examples described later can be suitably combined with each other. In addition, the numerical values "A to B" specified in the present specification refer to a range of a numerical value A and a value greater than the numerical value A and a numerical value B and a value smaller than the numerical value B. Numerical values specified in the present specification are values obtained by the method disclosed in the embodiments or examples. In addition, the sheet in the present specification is synonymous with film and plate. Unless otherwise noted, the various components appearing in the present specification may be used alone or in combination of two or more.

(First Embodiment)

[Magnetic Resin Composition]

A magnetic resin composition of the first embodiment contains a thermoplastic resin (A) and magnetic particles (B). As the magnetic particles (B), scale-like particles formed of an Fe-Si-Al alloy are used. A mass ratio of the thermoplastic resin (A) to the Fe-Si-Al alloy, that is, thermoplastic resin (A)/Fe-Si-Al alloy is 10/90 to 15/85. The magnetic resin composition is a kneaded mixture that is solid at room temperature. The magnetic resin composition referred to in the present specification is a resin composition obtained by kneading ingredients, and refers to a composition before molding. The composition before molding includes, for example, lumps, pellets, and granular magnetic resin compositions.

The magnetic resin composition is used in which the conditions (1) and (2) described below are satisfied when, in order to form the magnetic resin composition into a shape of a sheet, the sheet is prepared by uniformly applying a pressure of 15 MPa from above one main surface side of a sheet (from above one main surface of the sheet to be formed) over 1 minute at a temperature of the melting point of the thermoplastic resin (A) + 15°C, and in a cross-sectional surface in the thickness direction of the sheet, a region with a length of 0.125 mm and a thickness of 0.090 mm is subjected to image processing with a micrograph at a magnification of 2500. When two or more types of thermoplastic resins (A) are used, the sheet is prepared at a temperature of the highest melting point of the thermoplastic resin (A) + 15°C. In addition, the sheet preparation temperature is defined as a temperature that satisfies the following (1) and (2), and the preparation temperatures of various moldings of this magnetic resin composition are not limited at all as long as the preparation temperatures of various molded bodies which are based on sheets are the melting point or higher.

(1) A total area of the magnetic particles (B) subjected to image processing is 40% to 65% of the area of the image processing region.
(2) The number of the magnetic particles (B) subjected to image processing is 200 to 500.

In addition, these numerical values refer to values obtained by the method described in Examples to be described later.

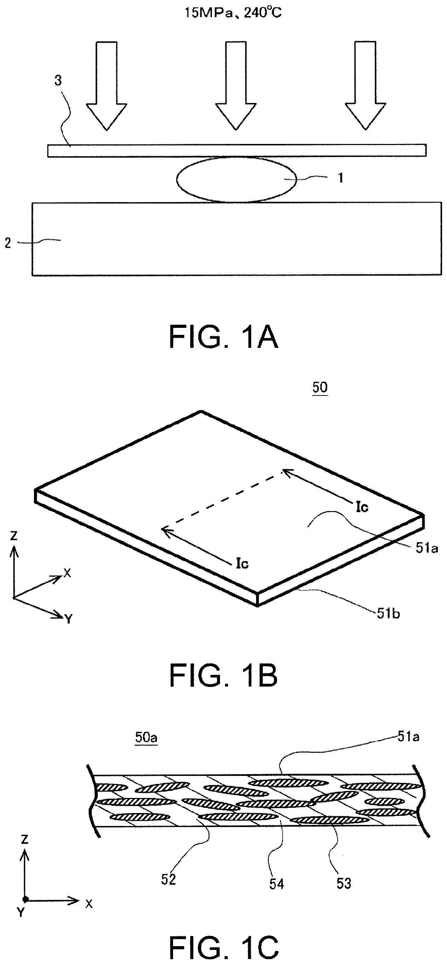

Fig. 1A is a schematic explanatory view of a method for forming the sheet of the magnetic resin composition of the first embodiment, Fig. 1B is a schematic perspective view of the obtained sheet, and Fig. 1C is a cross-sectional view taken along Ic-Ic of Fig. 1B. First, the magnetic resin composition 1 of the first embodiment is placed on a placing table 2, and in order to form a shape of a sheet, a pressure of 15 MPa is applied uniformly from the direction of one main surface of the sheet, that is, from above one main surface side of the sheet to be formed, over 1 minute at a temperature of the melting point of the thermoplastic resin (A) + 15°C (refer to Fig. 1A). Accordingly, a sheet 50 having a thickness of 1 mm is obtained (refer to Fig. 1B). The magnetic resin composition may be a pellet-like magnetic resin composition as well as a lump-like kneaded mixture. In this case, the pellet-like magnetic resin composition may be used as it is, or thermofusion may be performed with respect to the pellet to form a sheet having a shape of a lump as illustrated in Fig. 1A. As a method of applying pressure uniformly, any known method can be selected, but a method of applying pressure using a thermocompression bonding device via a releasable substrate 3 as illustrated in Fig. 1A is preferable. The sheet 50 has two main surfaces 51a and 51b.

A cross-sectional surface is obtained by cutting the sheet 50 in the film thickness direction at a substantially central part thereof. Then, a sheet 50a having a cross-sectional surface 52 is obtained by cutting at least 20% of each of both end parts in the X direction of the cross-sectional surface (refer to the cutting line along Ic-Ic in Fig. 1B, and Fig. 1C). In the cross-sectional surface 52 for measuring (1) and (2) above, the image processing region has a thickness of 0.090 mm and a length of 0.125 mm. As illustrated in Fig. 1C, magnetic particles (B) 53 are dispersed in a thermoplastic resin (A) 54. The cutting by 20% each is a condition for determining the measurement regions in (1) and (2) above, and as the molded body such as a sheet of this magnetic resin composition, the regions of 20% of the end parts are not excluded, and molded bodies of these magnetic resin compositions can also be suitably used.

In the first embodiment, a magnetic resin composition in which the scale-like particles formed of an Fe-Si-Al alloy are used as the magnetic particles (B) and the mass ratio of the thermoplastic resin (A) to the Fe-Si-Al alloy is 10/90 to 15/85 is obtained, and a sheet formed from this magnetic resin composition satisfies (1) and (2) above. That is, by using a sheet with a high filling rate of the magnetic particles (B) and high compactness, for example, it is possible to obtain a magnetic resin composition exhibiting excellent moldability and having high relative magnetic permeability even after injection molding. A molded body for magnetic shields such as a magnetic shield sheet is obtained by forming using the above magnetic resin composition. A method for forming the molded body for magnetic shields by thermofusion is suitable. Specifically, there are extrusion molding, injection molding, and compression molding, and among these, the injection molding method is particularly suitable from the viewpoint of stability of relative magnetic permeability and productivity.

Instead of using a coating liquid as in Patent Literature 4 and 5, when a sheet is prepared under the above specific conditions at a temperature of the melting point of the thermoplastic resin (B) (which is solid at room temperature) + 15°C, by using a magnetic resin composition that satisfies (1) and (2) above, a molded body having high compactness and exhibiting excellent orientation can be obtained. That is, a magnetic resin composition having high relative magnetic permeability and exhibiting excellent moldability can be obtained. This magnetic resin composition is particularly suitable as a magnetic resin composition for injection molding.

<Thermoplastic Resin (A)>

The magnetic resin composition of the first embodiment contains a thermoplastic resin (A). Specific examples of the thermoplastic resin (A) include polyamide resins, polyurethane resins, polyester resins, polyimide resins, fluorine resins, polystyrene resins, polycarbonate resins, polyethersulfone resins, polyolefin resins, (meth)acrylic resins, vinyl resins, acrylonitrile-styrene-butadiene resins, styrene-olefin resins, and vinyl chloride resins. Among these, from the viewpoint of excellent processability, mechanical properties, electrical properties, and heat resistance, polyamide resins, polyurethane resins, polyester resins, polystyrene resins, and polycarbonate resins are particularly suitable.

From the viewpoint of preventing insufficient filling (short shot) of the molded body and suppressing a decrease in the strength of the obtained molded product, it is preferable that the thermal decomposition start temperature of the magnetic resin composition be equal to or higher than the melting point of the thermoplastic resin (A) used + 20°C. The thermal decomposition start temperature is more preferably + 40°C or higher, and still more preferably + 50°C or higher. Here, the thermal decomposition start temperature refers to a value obtained by a determination method in examples described later. From the viewpoint of preventing short shots and suppressing a decrease in the strength of the obtained molded product, polyamide resins, polycarbonate resins, styrene resins, and polyester resins are suitable as the thermoplastic resin (A). In addition, a method using an additive, which will be described later, is suitable.

The melting point of the thermoplastic resin (A) is preferably 100°C or higher from the viewpoint of heat resistance and durability, and preferably 400°C or lower from the viewpoint of processability. By using the thermoplastic resin (A) that has a melting point of 100 to 400°C at the above content ratio, cracking and chipping of the magnetic particles (B), which are scale-like particles, can be more effectively suppressed during injection molding. The melting point is more preferably 150°C or higher, and even more preferably 300°C or lower.

Although the weight average molecular weight of the thermoplastic resin (A) is not particularly limited, the weight average molecular weight is preferably 10,000 to 200,000 from the viewpoint of film-forming properties and durability. The weight average molecular weight of 20,000 to 150,000 is more preferable, and 30,000 to 120,000 is even more preferable. The thermoplastic resin (A) can be used alone or in combination of two or more.

<Magnetic Particles (B)>

In the magnetic resin composition of the first embodiment, scale-like particles formed of an Fe-Si-Al alloy are used as the magnetic particles (B), and the thermoplastic resin (A) and the Fe-Si-Al alloy are incorporated in the above specific mass ratio. Here, the scale-like particles are thin plate-like particles such as scales, and are flake-like or flat-like particles. The planar shape thereof may include circular, elliptical, rectangular, irregular, and the like, but is suitably circular or elliptical. The aspect ratio (average particle size D50/thickness) of the scale-like particles is preferably 5 to 100, more preferably 10 to 90, and even more preferably 20 to 80, from the viewpoint of relative magnetic permeability. The average particle size D50 of the scale-like particles refers to a volume average particle size, and for example, using a commercially available particle size distribution measurement device (trade name: "LA-300", manufactured by Horiba Ltd., and the like), the particle size and volume of 100 scale-like particles were obtained, and based on this, and the volume average particle size can be calculated by obtaining a volume-weighted average value.

The average particle size of the scale-like particles to be incorporated is preferably 15 to 100 $\mu$m, more preferably 15 to 80 $\mu$m, and even more preferably 40 to 80 $\mu$m, in order to obtain excellent relative magnetic permeability.

The average thickness of the scale-like particles to be incorporated is preferably 0.5 to 20 $\mu$m, more preferably 1 to 10 $\mu$m, and even more preferably 1 to 5 $\mu$m, from the viewpoint of preventing cracking and chipping. For example, using a commercially available particle size distribution measurement device, the average thickness of the scale-like particles can be calculated by obtaining each thickness of 100 scale-like particles, and by obtaining the average value thereof.

The total area of the magnetic particles (B) subjected to image processing in (1) above is preferably 40 to 65%, and more preferably 45 to 60% of the area of the image processing region. The number of the particles of the magnetic particles (B) subjected to image processing in (2) above is preferably 200 to 500, and more preferably 250 to 450.

Further, the mass ratio of the thermoplastic resin (A) to the Fe-Si-Al alloy, that is, thermoplastic resin (A)/Fe-Si-Al alloy, is preferably 15/85 to 10/90, and more preferably 15/85 to 12/88.

The mass ratio (%) of the components contained in the Fe-Si-Al alloy can be any mass ratio, but the suitable range is $82 < Fe < 86.5$, $9.0 < Si < 11.0$, and $4.5 < Al < 7.0$, and preferably $83 < Fe < 85.6$, $9.4 < Si < 10.6$, and $5.0 < Al < 6.4$. In addition, an example of a suitable product of Fe-Si-Al alloy is Sendust.

The surface layer of the magnetic particles (B) may be surface-treated to improve compatibility with the thermoplastic resin (A). A suitable example is a state where a silicon compound such as silica is deposited. A silicon compound can be easily formed by using a silicon-based surface treatment agent. The silicon compound may be an organic surface treatment agent. The total area of the magnetic particles (B) in (1) above refers to the total area of the scale-like particles formed of the Fe-Si-Al alloy, and does not include the deposition layer formed on the surface of the magnetic particles (B). The same applies to the total area of (3) described later.

Silane compounds such as alkoxysilane and silazane are suitable as the silicon compound. Examples of alkoxysilanes include tetramethoxysilane, tetraethoxysilane (TEOS), tetraisopropoxysilane, tetrabutoxysilane, tetraoctylsilane, methyltrimethoxysilane, methyltriethoxysilane, ethyltriethoxysilane, methyltriisopropoxysilane, vinyltrimethoxysilane, phenyltrimethoxysilane, and dimethyldimethoxysilane, and examples of silazanes include hexamethyldisilazane, N-methyl-hexamethyldisilazane, N-ethyl-hexamethyldisilazane, hexamethyl-N-propyldisilazane, and perhydropolysilazane.

In addition, examples of the silicon compound include a silicone compound in which all or a part of the side chain and/or terminal of polysiloxane is a methyl group, a silicone compound in which a part of the side chain is a hydrogen atom, modified silicone compounds with organic groups such as amino groups and epoxy groups introduced into all or a part of the side chains and/or terminals, and silicone resins with branched structures. The silicone compound may have either a straight chain structure or a cyclic structure.

Examples of silicone compounds in which all or a part of the side chains and/or terminals of polysiloxane includes methyl groups include: monomethylpolysiloxanes such as polymethylhydrosiloxane (hydrogen-terminated), polymethylhydrosiloxane (trimethylsiloxy-terminated), polymethylphenylsiloxane (hydrogen-terminated), and polymethylphenylsiloxane (trimethylsiloxy-terminated); and dimethylpolysiloxanes such as dimethylpolysiloxane (hydrogen-terminated), dimethylpolysiloxane (trimethylsiloxy-terminated), and cyclic dimethylpolysiloxane.

Examples of silicone compounds in which a part of the side chain is a hydrogen atom include methylhydrosiloxane-dimethylsiloxane copolymer (trimethylsiloxy-terminated), methylhydrosiloxane-dimethylsiloxane copolymer (hydrogen-terminated), polymethylhydrosiloxane (hydrogen-terminated), polymethylhydrosiloxane (trimethylsiloxy-terminated), polyethylhydrosiloxane (triethylsiloxy-terminated), polyphenyl-(dimethylhydroxy)siloxane (hydrogen-terminated), methylhydrosiloxane-phenylmethylsiloxane copolymer (hydrogen-terminated), and methylhydrosiloxane-octylmethylsiloxane copolymer/terpolymer.

Examples of modified silicones into which organic groups have been introduced include: reactive silicones into which organic groups such as amino groups, epoxy groups, methoxy groups, (meth)acryloyl groups, phenol groups, carboxylic acid anhydride groups, hydroxy groups, mercapto groups, carboxy groups, and hydrogen atoms have been introduced; and non-reactive silicones modified with polyethers, aralkyls, fluoroalkyls, long-chain alkyls, long-chain aralkyls, higher fatty acid esters, higher fatty acid amides, and polyether methoxy.

The deposition treatment of the silicon compound on the surface layer of the magnetic particles (B) can be performed by a dry method or a wet method. A suitable example is a method in which a silicon-based surface treatment agent is added to a solution containing raw material particles, and a silicon compound such as silica ($SiO_2$) is deposited on the surface of the magnetic particles (B) by a sol-gel method. A base may be added to the silicon compound in order to promote hydrolysis of silane compounds such as alkoxysilanes and silazanes. Examples of the base include ammonia, sodium hydroxide, potassium hydroxide, and sodium carbonate.

The silicon compound used for the deposition treatment on the surface layer of the magnetic particles (B) is preferably a silane compound such as alkoxysilane or silazane, and more preferably alkoxysilane, from the viewpoint of reaction rate and yield with the magnetic particles (B).

It is preferable to add 5 to 50 parts by mass, and more preferably 15 to 40 parts by mass, of the silicon-based surface treatment agent to 500 parts by mass of the magnetic particles (B).

The following effects can be obtained by subjecting the surface layer of the magnetic particles (B) to surface modification treatment. First, compatibility with the thermoplastic resin (A) can be improved. As a result, cracking and chipping of the magnetic particles (B) when formed into a sheet can be effectively prevented. In addition, the fluidity of the magnetic resin composition can be improved. As a result, the orientation and area ratio of the magnetic particles (B) are enhanced when the magnetic resin composition is formed into a shape of a sheet, and a sheet exhibiting excellent relative magnetic permeability can be obtained. In addition, after injection molding, for the same reason, excellent orientation and area ratio can be achieved, and an injection molded body exhibiting excellent relative magnetic permeability can be obtained.

Furthermore, by effectively suppressing the generation of metal ions by surface modification treatment of the magnetic particles (B), it is possible to effectively reduce the magnetic loss due to the generation of eddy currents. In addition, the effect of suppressing the deterioration of the resin in the magnetic resin composition to improve the heat resistance and heat aging resistance and the effect of effectively exhibiting the rust prevention of the magnetic particles (B) can be obtained. Furthermore, by subjecting the surface layer of the magnetic particles (B) to the surface treatment, an effect of improving the dispersibility of the magnetic particles (B) can be expected due to a decrease in the specific surface area.

<Lubricant (C)>

The magnetic resin composition of the first embodiment can further contain a lubricant (C). By using the lubricant (C), when preparing a sheet from the magnetic resin composition, it is possible to improve the fluidity of the resin composition and effectively prevent cracking and chipping of the Fe-Si-Al alloy. As a result, the orientation and area ratio of the Fe-Si-Al alloy can be improved, and the relative magnetic permeability can be enhanced more effectively.

Examples of the lubricants (C) include ester-based lubricants, fatty acid-based lubricants, fatty acid amide-based lubricants, alcohol-based lubricants, metallic soaps, waxes, polymeric lubricants, nonionic surfactant-based lubricants, partially saponified product of montanic acid ester, and silicone-based lubricants.

Examples of ester-based lubricants include lower alcohol esters of fatty acids, polyhydric alcohol esters of fatty acids, polyglycol esters of fatty acids, and fatty alcohol esters of fatty acids. Specific examples include butyl stearate, stearic acid monoglyceride, pentaerythritol tetrastearate, stearyl stearate, and ethylene glycol monostearate. Examples of commercially available products include "RIKEMAL S-100" (glycerin monostearate) manufactured by Riken Vitamin Co., Ltd., "RIKEMAL S-300W" (sorbitan stearate) manufactured by Riken Vitamin Co., Ltd., "RIKEMAL EW-200" (pentaerythritol adipate stearate polymer ester) manufactured by Riken Vitamin Co., Ltd., "Unistar H-476" (pentaerythritol tetrastearate) manufactured by NOF CORPORATION, and "AX-518" (stearyl phosphate ester mixture) manufactured by Daikyo Kasei Kogyo Co., Ltd.

Examples of fatty acid-based lubricants include higher fatty acids and hydroxy fatty acids. Higher fatty acids are preferably C12 to C35. Specific examples include oleic acid, erucic acid, caproic acid, stearic acid, palmitic acid, myristic acid, arachidic acid, and behenic acid. Examples of commercial products include "Licowax OP" (montanic acid wax) manufactured by Clariant AG and "Lunac S-50V" (stearic acid) manufactured by Kao Corporation.

Examples of fatty acid amide-based lubricants include saturated fatty acid amide-based lubricants and unsaturated fatty acid amide-based lubricants. Examples of saturated fatty acid amide-based lubricants include behenic acid amide-based lubricants, stearic acid amide-based lubricants, hydroxystearic acid amide-based lubricants, palmitic acid amide-based lubricants, and lauric acid amide-based lubricants. Examples of unsaturated fatty acid amide-based lubricants include erucamide-based lubricants and oleic acid amide-based lubricants. Examples of bis fatty acid amide-based lubricants include methylenebis behenic acid amide-based lubricants, methylenebis stearic acid amide-based lubricants, methylenebis oleic acid amide-based lubricants, ethylenebis stearic acid amide-based lubricants, hexamethylenebis stearic acid amide-based lubricants, hexamethylenebis oleic acid amide-based lubricant; and examples of monoalkylolamide-based lubricant include N-(2-hydroxyethyl)lauric acid amide, N-(2-hydroxyethyl)stearic acid amide, and N-(2-hydroxymethyl)stearic acid amide. Examples of commercial products include "Light Amide WH255" (carboxylic acid amide wax) manufactured by Kyoeisha Yushi Kagaku Kogyo Co., Ltd., "Fatty Amide S" (stearic acid amide) manufactured by Kao Corporation, "Fatty Amide O-N" (oleic acid amide) manufactured by Kao Corporation, "Fatty Amide E" (erucic acid amide) manufactured by Kao Corporation, and "KAO WAX EB-P" (ethylene bis stearic acid amide) manufactured by Kao Corporation.

Suitable examples of alcohol-based lubricants include polyhydric alcohols, polyglycols, and polyglycerols. Specific examples thereof include cetyl alcohol, stearyl alcohol, oleyl alcohol, and mannitol. Examples of products include "KALCOL 8098" (stearyl alcohol) manufactured by Kao Corporation.

As the fatty acid metal salt-based lubricant (metallic soap), a compound of a fatty acid having 6 to 50 carbon atoms and a metal is suitable. The number of carbon atoms is more preferably 10 to 40, and further more preferably 10 to 30. Suitable examples of fatty acids include lauric acid, stearic acid, succinic acid, stearyllactic acid, lactic acid, phthalic acid, benzoic acid, hydroxystearic acid, ricinoleic acid, naphthenic acid, oleic acid, palmitic acid, and erucic acid, and examples of metal include Li, Na, Mg, Ca, Sr, Ba, Zn, Cd, Al, Sn, Pb, and Cd. Suitable examples thereof include magnesium stearate, calcium stearate, sodium stearate, zinc stearate, calcium oleate, zinc oleate, and magnesium oleate. Examples of commercial products include magnesium stearate (manufactured by Wako Pure Chemical Industries, Ltd.), zinc stearate (manufactured by Wako Pure Chemical Industries, Ltd.), "SC-100" (calcium stearate) manufactured by Sakai Chemical Industry Co., Ltd., and "TSVN-2000E" (butyltin malate) manufactured by Nitto Kasei Co., Ltd.

Examples of waxes include: petroleum waxes such as paraffin wax, microcrystalline wax, and polyolefin wax; and natural waxy substances such as carnauba wax, montan wax, candelilla wax, microcrystalline wax, beeswax, and pine resin. Examples of polyolefin waxes include low polymer polyethylene waxes and polypropylene waxes. The number average molecular weight of these polyolefin waxes is preferably 10,000 or less, more preferably 8,000 or less, and even more preferably 6,000 or less. Examples of products include "High Wax 420P" (low molecular polyethylene wax) manufactured by Mitsui Chemicals, Inc., "AC629A" (oxidized polyethylene wax) manufactured by AlliedSignal, and "Lubax 2191" (microcrystalline wax) manufactured by Nippon Seiro Co., Ltd.

Examples of polymeric lubricants include alkyl acrylate/alkyl methacrylate/styrene copolymers. The number average molecular weight of the polymeric lubricant is preferably 3,000 or more, and more preferably 5,000 to 50,000. Examples of commercial products include "PARALOID K125P" (polymeric lubricant) manufactured by Kureha Corporation, and "Metabrene L-1000" (acrylic polymer) manufactured by Mitsubishi Rayon Co., Ltd.

Examples of nonionic surfactant-based lubricants include electrostripper-TS-2 and electrostripper-TS-3 (Kao's soap products).

Examples of silicone-based lubricants include dimethylpolysiloxane and modified products thereof, carboxyl-modified silicone, $\alpha$-methylstyrene-modified silicone, $\alpha$-olefin-modified silicone, polyether-modified silicone, fluorine-modified silicone, hydrophilic special modified silicone, olefin polyether-modified silicone, epoxy-modified silicone, amino-modified silicone, amide-modified silicone, and alcohol-modified silicone.

From the viewpoint of enhancing compatibility with the thermoplastic resin (A), suitable types of the lubricant (C) include long-chain alkyl carboxylates, long-chain alkyl alcohols, glycerin fatty acid monoesters, glycerin fatty acid diesters, glycerin fatty acid triesters, long-chain alkylcarboxylic acid ester waxes, long-chain alkylcarboxylic acid amides, ethylene bis stearylamide, polyethylene waxes, and paraffin waxes. Further, when using a polyamide resin, a polyurethane resin, a polyester resin, or a polycarbonate resin as the thermoplastic resin (A), it is more preferable to use a fatty acid amide-based lubricant from the viewpoint of compatibility, and when using a polystyrene resin or a polyolefin resin, it is more preferable to use liquid paraffin or olefin wax from the viewpoint of compatibility.

The molecular weight of the lubricant (C) is preferably 100 to 5000, and more preferably 300 to 4000, from the viewpoint of heat resistance.

The content of the lubricant (C) is preferably 0.1 to 10 parts by mass with respect to 100 parts by mass of the thermoplastic resin (A) from the viewpoint of improving the orientation and area ratio of the Fe-Si-Al alloy, and it is preferable to use 0.5 to 10 parts by mass with respect to 100 parts by mass of the thermoplastic resin (A) from the viewpoint of improving the orientation and area ratio in the case of injection molding.

<Others>

The magnetic resin composition of the first embodiment may contain other components within the scope of the present invention. Examples thereof include antioxidants, flame retardants, ultraviolet absorbers, antistatic agents, antiblocking agents, colorants, dispersants, fillers, and the like. Moreover, a solvent can be added as a lubricant. A magnetic resin composition that does not substantially contain a solvent is preferable from the viewpoint of obtaining a molded body having high compactness and high magnetic permeability when thermofusion is performed. "does not substantially contain a solvent" means not containing any solvent other than the solvent that may be unavoidably contained. Further, a thermoplastic resin other than the thermoplastic resin (A) and magnetic particles other than the magnetic particles (B) may be contained within the scope of the present invention.

Other components can be used alone or in combination of two or more.

As a filler, a thermally conductive filler such as boron nitride can be suitably contained. However, the addition of graphite or carbon filler tends to increase the melt viscosity at the melting temperature and lower the moldability.

<Method for Producing Magnetic Resin Composition>

An example of the method for producing the magnetic resin composition of the first embodiment will be described. However, the method is not limited to the following production methods.

A known method can be applied as a method of making the Fe-Si-Al alloy into scale-like particles. For example, a process of obtaining a raw material powder formed of an Fe-Si-Al alloy by a gas atomizing method or a disc atomizing method is performed, and then a process of flattening this raw material powder is performed. Then, the scale-like particles can be produced through a process of heat-treating the flattened powder at 700 to 900°C in a vacuum or an argon atmosphere. The raw material powder may contain trace elements such as manganese.

Next, the thermoplastic resin (A), the magnetic particles (B), and optional components, as necessary, are kneaded. As the kneading method, a kneading method with a low shear at a temperature above the melting point is suitable. The low shear kneading method is a method that minimizes the generation of external pressure and shear, and the external pressure and shear in the low shear kneading method in the present invention refer to the resin pressure measured in the kneader. Although the method may vary depending on the viscosity of the thermoplastic resin (A) used, the method refers to a method of kneading at a resin pressure of 0.01 to 50.0 atmospheres. From the viewpoint of preventing cracking and chipping of the scale-like particles, the kneading is preferably performed at 0.01 to 5.0 atmospheres, and more preferably 1 to 1.2 atmospheres.

From the viewpoint of effectively preventing cracking and chipping of the magnetic particles (B) during melt-kneading of the magnetic resin composition, it is preferable that the melt viscosity of this magnetic resin composition at a shear rate of 304 [1/s] be less than 10000 Pa s at any temperature between the melting point of the thermoplastic resin (A) and the melting point + 50°C. The melt viscosity is more preferably less than 5000 Pa·s, and still more preferably less than 3000 Pa·s. Although the lower limit value is not particularly limited, the melt viscosity is usually 1.0 Pa·s. When two or more types of thermoplastic resins (A) are used, it is preferable to satisfy the melt viscosity at any temperature between the melting point of the thermoplastic resin (A) having a high melting point and the melting point + 50°C. The melt viscosity can be adjusted by replacing the type of thermoplastic resin (A) and the incorporation ratio with the magnetic particles (B). The melt viscosity tends to decrease by using a thermoplastic resin (A) with a small molecular weight or by increasing the temperature during melt-kneading.

According to the low shear kneading method, cracking and chipping of scale-like particles can be effectively improved even when Fe-Si-Al alloy is used as magnetic particles. In addition, according to this magnetic resin composition, since the magnetic resin composition is solid at room temperature and molded in a molten state, the compactness of the molded body can be significantly enhanced. In addition, it is possible to obtain a molded body having the orientation of the magnetic particles (B). As a result, magnetic particles with high magnetic permeability can be provided. In addition, the degree of freedom in designing the shape can be remarkably enhanced as compared with the case of using paint. For example, it is possible to freely produce a molded body having a desired shape having a thicker sheet and a sheet-like part. Therefore, it is possible to provide a magnetic shield sheet exhibiting excellent relative magnetic permeability even when the thickness is increased by, for example, injection molding. By containing the lubricant (C) during kneading, cracking and chipping of the scale-like particles can be more effectively prevented.

It is needless to say that the magnetic particles (B) to be measured in (1) and (2) above also include particles that do not show the shape of scale-like particles due to cracking or chipping.

<Characteristics>

According to the magnetic resin composition of the first embodiment, the mass ratio of the thermoplastic resin (A) to the Fe-Si-Al alloy is within the above range, and by satisfying (1) and (2) above, the relative magnetic permeability of the molded body can be increased. The higher the relative magnetic permeability, the better. For example, when the sheet thickness is 1 mm, the relative magnetic permeability is preferably 150 or more, and when the sheet thickness is 3 mm, the relative magnetic permeability is preferably 100 or more. The magnetic resin composition according to the first embodiment can be suitably used in a frequency band of, for example, several kW to 1 MHz. According to this magnetic resin composition, a molded body having a high magnetic permeability can be obtained by thermofusion, and thus this magnetic resin composition is particularly useful as a magnetic resin composition for injection molding, which exhibits excellent productivity and has a high degree of freedom in designing the molded body. The magnetic resin composition of the present invention is particularly useful for manufacturing a molded body having a sheet-like part as in the embodiment described later, but the magnetic resin composition of the present invention can also be suitably applied to a molded body that does not have a sheet-like part.

[Injection Molded Body for Magnetic Shields]

The injection molded body for magnetic shields according to the first embodiment contains a thermoplastic resin (A) and magnetic particles (B). As the magnetic particles (B), scale-like particles made of an Fe-Si-Al alloy are used. The injection molded body for magnetic shields is an injection molded body of a magnetic resin composition in which the mass ratio of the thermoplastic resin (A) to the Fe-Si-Al alloy, that is, thermoplastic resin (A)/Fe-Si-Al alloy is 10/90 to 15/85.

The injection molded body for magnetic shields according to the first embodiment has a sheet-like part at least at a part thereof. Here, the sheet-like part refers to a part having a shape that spreads as a two-dimensional surface and has a thin thickness, and includes curved surfaces as well as flat surfaces. In the cross-sectional surface in the thickness direction of this sheet-like part, a surface that satisfies the conditions (3) and (4) described below when a region with a length of 0.125 mm and a thickness of 0.090 mm is subjected to image processing with a micrograph at a magnification of 2500 is provided. When the sheet-like part has a curved surface, the vertical direction of the tangential surface (tangential line) is taken as the thickness direction, and the region of length and thickness along the curved surface is taken as the measurement region.

(3) A total area of the magnetic particles (B) subjected to image processing is 40% to 65% of the area of the image processing region.

(4) The number of the magnetic particles (B) subjected to image processing is 200 to 500.

As for the region with a length of 0.125 mm and a thickness of 0.090 mm, as described with reference to Fig. 1C, the region obtained by cutting 20% of each of both end parts of the cross-sectional surface was measured. The cutting by 20% each is a condition for determining the measurement regions in (3) and (4) above, and as this injection molded body for magnetic shields, the regions of 20% of the end parts of the sheet-like part are not excluded, and molded bodies of these regions can also be suitably used.

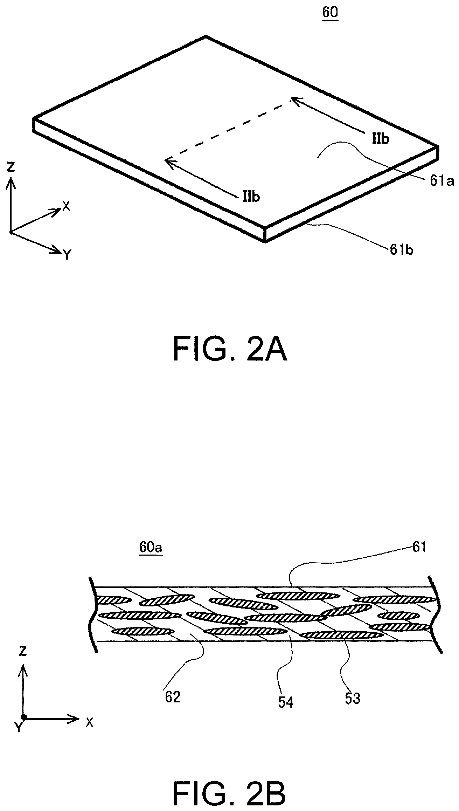

As an injection molded body for magnetic shields of the first embodiment, a sheet will be described below as an example. Fig. 2A illustrates a schematic perspective view of the injection molded body for magnetic shields, and Fig. 2B illustrates a sectional view taken along IIb-IIb of Fig. 2A. A sheet-like injection molded body for magnetic shields 60 has two main surfaces 61a and 61b, as illustrated in Fig. 2A. A cross-sectional surface is obtained by cutting the injection molded body for magnetic shields 60 in the film thickness direction at a substantially central part thereof. Then, a sheet 60a having a cross-sectional surface 62 is obtained by cutting at least 20% of each of both end parts in the X direction of the cross-sectional surface (refer to the cutting line along IIb-IIb in Fig. 2A, and Fig. 2B). The region (image processing region) of the cross-sectional surface 62 for measuring (3) and (4) above has a thickness of 0.090 mm and a length of 0.125 mm. As illustrated in Fig. 2B, magnetic particles (B) 53 are dispersed and disposed in the thermoplastic resin (A) 54. The measurement method and definition of the magnetic particles (B) in the sheet 60a have been described in (1) and (2) above, and thus will be omitted here. Further, the details of the magnetic resin composition will be omitted because they overlap with the above embodiment.

In the first embodiment, a magnetic resin composition in which the scale-like particles formed of an Fe-Si-Al alloy are used as the magnetic particles (B) and the mass ratio of the thermoplastic resin (A) to the Fe-Si-Al alloy is 10/90 to 15/85 is obtained, and a surface in which a sheet-like part formed from the injection molded body of this magnetic resin composition satisfies (3) and (4) above is provided. Injection molding is performed by injecting a heated and melted magnetic resin composition into a mold, and by cooling and solidifying it. The injection direction is not particularly limited, but from the viewpoint of enhancing the orientation of the magnetic particles (B), the injection direction of the resin preferably coincides with the surface direction of the sheet-like part.

The sheet-like part of the injection molded body for magnetic shields may have a surface that satisfies (3) and (4) above, and all surfaces of the sheet-like part may satisfy (3) and (4) above. From the viewpoint of obtaining an injection molded body for magnetic shields exhibiting a higher magnetic permeability, it is preferable that the above (3) and (4) are satisfied in any direction except for the 20% region of the end part of the sheet-like part.

According to the injection molded body for magnetic shields, by using an injection molded body having a sheet-like part having a high filling rate of the magnetic particles (B) and high compactness, a molded body having high relative magnetic permeability even after injection molding processing is obtained.

According to the injection molded body for magnetic shields of the first embodiment, the present invention can be suitably applied to a sheet-like molded body, a cylindrical molded body, a complicated-like molded body, and the like. Since the degree of freedom is high in terms of thickness and shape, the molded body can be used for various purposes as a magnetic shield member. When used as a sheet, the molded body is used as a single layer or multiple layers. In addition, the molded body can be used by being laminated with other sheets.

<Method for Producing Injection Molded Body for Magnetic Shields>

An example of the method for producing the magnetic shield sheet of the first embodiment will be described. However, the method is not limited to the following production methods.

The magnetic resin composition can be suitably produced by the method described above. After that, injection molding is performed. The injection molding temperature is set to a temperature equal to or higher than the melting point of the thermoplastic resin (A). From the viewpoint of effectively preventing cracking and chipping of the magnetic particles (B) during injection molding, it is preferable to use a magnetic resin composition having a melt viscosity of 10000 Pa s or less at a shear rate of 304 [1/s] at the injection molding temperature of this magnetic resin composition. The melt viscosity is more preferably less than 8000 Pa·s, and still more preferably less than 5000 Pa·s. Although the lower limit value is not particularly limited, the melt viscosity is usually 1.0 Pa·s. The injection temperature is preferably equal to or higher than the melting point of the thermoplastic resin (A) +15°C. Therefore, the melt viscosity at a shear rate of 304 [1/s] of this magnetic resin composition at the temperature of the melting point of the thermoplastic resin (A) + 15°C is preferably 10000 Pa s or less, more preferably 8000 Pa·s or less, and even more preferably 5000 Pa s or less.

For example, injection molding of the sheet can be performed by known methods. The thermoplastic resin (A) is melted and injection molding is performed. The average thickness is, for example, 0.8 to 10 mm. In the case of forming multiple layers, multi-layer injection molding, insert molding, sandwich molding and the like can be exemplified.

(Second Embodiment)

The magnetic resin composition of the second embodiment has the same basic configuration and production method as those of the first embodiment, except that an antioxidant (D) is contained. In addition, the overlapping description will be omitted suitably in subsequent description.

A magnetic resin composition of the second embodiment contains the thermoplastic resin (A), the magnetic particles (B), and the antioxidant (D). As the magnetic particles (B), scale-like particles formed of an Fe-Si-Al alloy are used, and the mass ratio of the thermoplastic resin (A) to the Fe-Si-Al alloy, that is, thermoplastic resin (A)/Fe-Si-Al alloy is 10/90 to 15/85.

The magnetic resin composition is used in which the conditions (1) and (2) described below are satisfied when, in order to form the magnetic resin composition into a shape of a sheet, the sheet is prepared by uniformly applying a pressure of 15 MPa from above one main surface side of a sheet to be formed over 1 minute at a temperature of the melting point of the thermoplastic resin (A) + 15°C, and in a cross-sectional surface of the sheet, a region with a length of 0.125 mm and a thickness of 0.090 mm is subjected to image processing with a micrograph at a magnification of 2500.

(1) A total area of the magnetic particles (B) subjected to image processing is 40% to 65% of the area of the image processing region.
(2) The number of the magnetic particles (B) subjected to image processing is 200 to 500.

The antioxidant (D) is a compound that prevents oxidative deterioration of the resin, and is broadly classified into a radical chain initiation inhibitor, a radical scavenger, and a peroxide decomposer. Among these, a radical chain initiation inhibitor or a radical scavenger is more preferable from the viewpoint of preventing deterioration of the resin due to metal ions. Note that the antioxidant (D) does not include a metal deactivator (E) specified in the third embodiment described later. In addition, the antioxidant (D) may contain the lubricant (C) and the additives mentioned in the first embodiment.

Suitable examples of the antioxidant (D) include phenolic antioxidants, phosphite antioxidants, sulfur-based antioxidants, hindered amine antioxidants, thioether antioxidants, and epoxy antioxidants. Among these, phenolic antioxidants and phosphite antioxidants are preferable. Antioxidants (D) can be used alone or in combination of two or more.

Specific examples of phosphite antioxidants include tricresyl phosphite, tris(2-ethylhexyl) phosphite, tridecyl phosphite, trilauryl phosphite, tris(tridecyl) phosphite, trioleyl phosphite, and ADK STAB PEP-8, ADK STAB PEP-36, ADK STAB HP-10, ADK STAB 2112, ADK STAB 2112RG, ADK STAB 1178, ADK STAB 1500, ADK STAB C, ADK STAB 135A, ADK STAB 3010, and ADK STAB TPP, which are manufactured by ADEKA Corporation. Phosphite antioxidants are not limited to these.

Examples of phenolic antioxidants include hindered phenolic antioxidants, semi-hindered phenolic antioxidants, and less hindered phenolic antioxidants.

Semi-hindered phenolic antioxidants are antioxidants having a phenolic structure in which one of the ortho positions of the OH group (phenolic hydroxyl group) constituting the phenolic structure is a bulky group (for example, a t-butyl group), and the other is a methyl group. Specific examples thereof include 3,9-bis[2-{3-(3-tertiary-butyl-4-hydroxy-5-methylphenyl)propionyloxy}-1,1-dimethyleth yl]-2,4,8,10-tetraoxaspiro[5,5]undecane (for example, trade name "ADK STAB AO-80", manufactured by ADEKA Corporation), ethylenebis(oxyethylene)bis[3-(5-tert-butyl-hydroxy-m -tolyl)propionate] (for example, trade name "Irganox 245", manufactured by BASF), and triethylene glycol bis[3-(3-tert-butyl-4-hydroxy-5-methylphenyl)propionate] (for example, trade name "ADK STAB AO-70", manufactured by ADEKA Corporation).

Less hindered phenolic antioxidants are antioxidants having a phenolic structure in which one of the ortho positions of the phenolic hydroxyl group is a bulky group (for example, t-butyl group), and the other is hydrogen. Specific examples thereof include 1,1,3-tris-(2-methyl-4-hydroxy-5-tertiary-butylphenyl)butane (for example, trade name "ADK STAB AO-30", manufactured by ADEKA Corporation), 4,4'-butylidenebis(6-t-butyl-3-methylphenol) (for example, trade name "ADK STAB AO-40", manufactured by ADEKA Corporation), and 4,4'-thiobis(6-t-butyl-3-methylphenol) (for example, trade name "Sumilizer WX-R", manufactured by Sumitomo Chemical Co., Ltd.).

Hindered phenolic antioxidants are antioxidants having a phenolic structure in which both of the ortho positions of the phenolic hydroxyl group are bulky groups (for example, t-butyl group). Examples thereof include pentaerythritol tetrakis[3-(3,5-di-tert-butyl-4-hydroxyphenyl)propionate, thiodiethylenebis[3-(3,5-di-tert-butyl-4-hydroxyphenyl) propionate], octadecyl-3-(3,5-di-tert-butyl-4-hydroxyphenyl)propionate, N,N'-hexane-1,6-diylbis[3-(3,5-di-tert-butyl-4-hydroxyphenyl)propionamide], benzenepropanoic acid, 3,5-bis(1,1-dimethylethyl)-4-hydroxy, C7-C9 side chain alkyl ester, 3,3',3",5,5',5"-hexa-tert-butyl-a,a',a"-(mesitylene-2,4,6-triyl)tri-p-cresol, calcium diethylbis[[[3,5-bis(1,1-dimethylethyl)-4-hydroxyphenyl]methyl]phosphonate], 4,6-bis(octylthiomethyl)-o-cresol, 4,6-bis(dodecylthiomethyl)-o-cresol, hexamethylenebis[3-(3,5-di-tert-butyl-4-hydroxyphenyl)propionate, 1,3,5-tris(3,5-di-tert-butyl-4-hydroxybenzyl)-1,3,5-triazine-2,4,6(1H,3H,5H)-trione, reaction product of N-phenylbenzenamine and 2,4,4-trimethylpentene, 2,6-di-tert-butyl-4-(4,6-bis(octylthio)-1,3,5-triazin-2-ylamino)phenol, triethyleneglycol-bis[3-(3-t-butyl-5-methyl-4-hydroxyphenyl)propionate], 1,6-hexanediol-bis[3-(3,5-di-t-butyl-4-hydroxyphenyl)propionate], 2,6-di-tert-butyl-p-cresol, 2,2'-ethylidene-bis(4,6-di-tert-butylphenol), 1,3,5-tris(3,5-di-tert-butyl-4-hydroxybenzyl) isocyanurate, 1,3,5-trimethyl-2,4,6-tris(3,5-di-tert-butyl-4-hydroxybenzyl)benzene, 5-di-tert-butyl-4-hydroxyhydrocinnamate, 3,9-bis[2-[3-(3-t-butyl-4-hydroxy-5-methylphenyl)propionyloxy]-1,1-dimethylethyl]-2,4, 8,10-tetraoxaspiro[5.5]undecane, 1,3,5-tris(2,6-dimethyl-4-tert-butyl-3-hydroxybenzyl)isocyanurate, 3,5-di(3,5-di-tert-butyl-4-hydroxybenzyl)mesitol, 3,6-dioxaoctamethylenebis(3-methyl-5-tert-butyl-4-hydroxyhydrocinnamate), 1,1,3-tris(2-methyl-4-hydroxy-5-tert-butylphenyl)butane, 1,3,5-tris[2-(3,5-di-tcrt-butyl-4-hydroxyhydrocinnamoyloxy)ethyl]isocyanurate, thiodiethylenebis(3,5-di-tert-butyl-4-hydroxyhydrocinnamate), tetrakis[methylene-3-(3,5-di-t-butyl-4-hydroxyphenyl)propionate]methane, n-octadecyl 3di-n-octadecyl-3,5-di-tert-butyl-4-hydroxybenzylphosphonate, and octadecyl-3-(3,5-t-butyl-4-hydroxyphenyl)propionate.

Specific examples of sulfur-based antioxidants include tetrakis[methylene-3-(laurylthio)propionate]methane, bis(methyl-4-[3-n-alkyl(C12/C14)thiopropionyloxy]5-tert-butylphenyl)sulfide, ditridecyl-3,3' -thiodipropionate, dilauryl-3,3 '-thiodipropionate, dimyristyl-3,3'-thiodipropionate, distearyl-3,3'-thiodipropionate, lauryl/stearyl thiodipropionate, 4,4'-thiobis(6-tert-butyl-m-cresol), 2.2'-thiobis(6-tert-butyl-p-cresol), and distearyl-disulfide.

Among these, from the viewpoint of improving heat resistance, hindered phenolic antioxidants, phosphite antioxidants, and semi-hindered phenolic antioxidants are preferable, and hindered phenolic antioxidants and semi-hindered phenolic antioxidants are more preferable. By using a hindered phenolic antioxidant and/or a semi-hindered phenolic antioxidant as the antioxidant (D), oxidative deterioration of the resin during processing can be suppressed, and fluidity during injection molding and mechanical properties and magnetic permeability of molded product can be improved.

The content of the antioxidant (D) is not particularly limited, but can be, for example, 0.01 to 5.00% by mass with respect to 100% by mass of the magnetic resin composition. From the viewpoint of processability, the content is preferably 0.05 to 1.00% by mass.

By incorporating the antioxidant (D) into this magnetic resin composition, radicals generated in the composition can be quickly captured. As a result, in addition to the effects described in the first embodiment, heat resistance and heat aging resistance can be further improved. This effect can be enhanced more effectively by combining the antioxidant (D) with the magnetic particles (B) surface-treated with a silicon compound.

(Third Embodiment)

The magnetic resin composition of a third embodiment has the same basic configuration and production method as those of the first embodiment, except that a metal deactivator (E) is contained. The second embodiment and the third embodiment may be combined with each other. That is, the magnetic resin composition of the third embodiment may further contain the antioxidant (D). In addition, the antioxidant (D) may contain the lubricant (C) and the additives mentioned in the first embodiment.

A magnetic resin composition of the third embodiment contains the thermoplastic resin (A), the magnetic particles (B), and the metal deactivator (E). As the magnetic particles (B), scale-like particles formed of an Fe-Si-Al alloy are used, and the mass ratio of the thermoplastic resin (A) to the Fe-Si-Al alloy, that is, thermoplastic resin (A)/Fe-Si-Al alloy is 10/90 to 15/85.

The magnetic resin composition is used in which the conditions (1) and (2) described below are satisfied when, in order to form the magnetic resin composition into a shape of a sheet, the sheet is prepared by uniformly applying a pressure of 15 MPa from above one main surface side of a sheet to be formed over 1 minute at a temperature of the melting point of the thermoplastic resin (A) + 15°C, and in a cross-sectional surface of the sheet, a region with a length of 0.125 mm and a thickness of 0.090 mm is subjected to image processing with a micrograph at a magnification of 2500.

(1) A total area of the magnetic particles (B) subjected to image processing is 40% to 65% of the area of the image processing region.

(2) The number of the magnetic particles (B) subjected to image processing is 200 to 500.

The metal deactivator (E) is a compound that suppresses discoloration and deterioration of the resin caused by contact between the metal and the resin. Specific examples thereof include: salicylic acid derivatives such as 3-(N-salicyloyl)amino-1,2,4-triazole; oxalic acid derivatives such as 2,2'-oxamide-bis[ethyl-3-(3,5-di-t-butyl-4-hydroxyphenyl)propionate]; and hydrazide derivatives such as N,N'-bis[3(3,5-t-butyl-4-hydroxyphenyl)propionyl]hydrazine. The metal deactivator (E) can be used alone or in combination of two or more. Examples of name of commercial products include ADK STAB CDA-1 (manufactured by ADEKA Corporation), ADK STAB CDA-10 (manufactured by ADEKA Corporation), and Naugard XL-1 (manufactured by AccuStandard Inc.).

Among these, from the viewpoint of heat resistance, hydrazide derivatives or salicylic acid derivatives are preferable, and hydrazide derivatives are more preferable. By using a hydrazide derivative as the metal deactivator (E), deterioration of the resin due to the metal filler can be suppressed, and the heat resistance and weather resistance of the molded product can be further improved.

The content of the metal deactivator (E) is not particularly limited, but can be, for example, 0.01 to 5.00% by mass with respect to 100% by mass of the magnetic resin composition. From the viewpoint of processability, the content is preferably 0.05 to 1.00% by mass.

By incorporating the metal deactivator (E) into the magnetic resin composition, rusting of the magnetic particles (B) can be effectively prevented. Moreover, by using this magnetic resin composition in which the metal deactivator (E) and the magnetic particles (B) surface-treated with a silicon compound are used in combination, heat resistance, heat aging resistance, and rust prevention effect can be enhanced more effectively. Moreover, from the viewpoint of further effectively enhancing heat resistance and heat aging resistance, it is more suitable to use the metal deactivator (E) and the antioxidant (D) together.

(Fourth Embodiment)

A magnetic resin composition of the fourth embodiment contains the thermoplastic resin (A), the magnetic particles (B), the lubricant (C), the antioxidant (D). and the metal deactivator (E). In addition, as the magnetic particles (B), scale-like particles formed of an Fe-Si-Al alloy are used, and the mass ratio of the thermoplastic resin (A) to the Fe-Si-Al alloy, that is, thermoplastic resin (A)/Fe-Si-Al alloy is 10/90 to 15/85.

The thermoplastic resin (A), the magnetic particles (B), and the lubricant (C) are common to those of the first embodiment, the antioxidant (D) is common to that of the second embodiment, and the metal deactivator (E) is common to that of the third embodiment. The basic configuration and production method of the magnetic resin composition of the fourth embodiment are similar to those of the first to third embodiments described above, except that the conditions (1) and (2) described in the first embodiment and the like (the conditions (1) and (2) described in the first embodiment when, in order to form the magnetic resin composition into a shape of a sheet, the sheet is prepared by uniformly applying a pressure of 15 MPa from above one main surface side of a sheet to be formed over 1 minute at a temperature of the melting point of the thermoplastic resin (A) + 15°C, and in a cross-sectional surface of the sheet, a region with a length of 0.125 mm and a thickness of 0.090 mm is subjected to image processing with a micrograph at a magnification of 2500.) are not essential.

The suitable range of the average particle size and the suitable range of the average thickness of the scale-like particles formed of the Fe-Si-Al alloy are the same as those in the first embodiment. In addition, the suitable range of the mass ratio of the thermoplastic resin (A) to the Fe-Si-Al alloy, that is, thermoplastic resin (A)/Fe-Si-Al alloy, and the suitable range of the content of each element in the Fe-Si-Al alloy is also the same as those in the first embodiment. In the magnetic particles (B), in order to improve the compatibility with the thermoplastic resin (A), a silicon compound such as silica is deposited on a part of surface layer thereof. A silicon compound can be easily formed by using a silicon-based surface treatment agent. The silicon compound may be an organic surface treatment agent.

Suitable examples of silicon compounds include the compounds described in the first embodiment. Further, examples of the deposition treatment method of the silicon compound on the magnetic particles (B) include the method described in the first embodiment. The silicon compound used for the deposition treatment on the magnetic particles (B) is preferably a silane compound such as alkoxysilane or silazane, and more preferably alkoxysilane, from the viewpoint of reaction rate and yield with the magnetic particles (B). It is preferable to add 5 to 50 parts by mass, and more preferably 15 to 40 parts by mass, of the silicon-based surface treatment agent to 500 parts by mass of the magnetic particles (B). The same effect as in the first embodiment can be obtained by the surface modification treatment of the magnetic particles (B).

Suitable examples of the thermoplastic resin (A) include the resins exemplified in the first embodiment. Suitable examples of the melting point and weight average molecular weight of the thermoplastic resin (A) are also the same as in the first embodiment. The thermoplastic resin (A) can be used alone or in combination of two or more.

Suitable examples of the lubricant (C) are the same compounds as in the first embodiment. The suitable ranges for the molecular weight and content of the lubricant (C) are as described in the first embodiment. By using the lubricant (C), when preparing a sheet from the magnetic resin composition, it is possible to improve the fluidity of the resin composition and effectively prevent cracking and chipping of the Fe-Si-Al alloy. As a result, the orientation and area ratio of the Fe-Si-Al alloy can be improved, and the relative magnetic permeability can be enhanced more effectively.

Although the antioxidant (D) is not limited, suitable examples thereof include the compounds described in the second embodiment. That is, examples thereof include phenolic antioxidants, phosphite antioxidants, sulfur-based antioxidants, hindered amine antioxidants, thioether antioxidants, and epoxy antioxidants. Among these, phenolic antioxidants and phosphite antioxidants are preferable. Antioxidants (D) can be used alone or in combination of two or more.

Although the metal deactivator (E) is not limited, suitable examples thereof include the compounds described in the third embodiment.

The magnetic resin composition of the fourth embodiment may contain other components within the scope of the present invention. Examples include solvents, flame retardants, ultraviolet absorbers, antistatic agents, antiblocking agents, colorants, dispersants, fillers, and the like. These can be used alone or in combination. Although the method for producing the magnetic resin composition of the fourth embodiment is not limited, suitable examples thereof include the method exemplified in the first embodiment. The magnetic shield sheet can be produced from the magnetic resin composition according to the fourth embodiment in the same manner as in the first embodiment.

In the fourth embodiment, by forming the magnetic resin composition such that scale-like particles that are formed of an Fe-Si-Al alloy are used as the magnetic particles (B), and the mass ratio of thermoplastic resin (A) to the Fe-Si-Al alloy is 10/90 to 15/85, it is possible to obtain a magnetic resin composition exhibiting excellent moldability and having high relative magnetic permeability even after injection molding. The magnetic shield sheet of the fourth embodiment is used as a single layer or multiple layers. In addition, the molded body can be used by being laminated with other sheets.

Further, according to the magnetic resin composition according to the fourth embodiment, the lubricant (C) improves the fluidity of the magnetic resin composition, and the antioxidant (D) effectively prevents oxidative deterioration of the resin. Furthermore, by using the metal deactivator (E), discoloration and deterioration of the resin caused by contact between the metal and the resin can be effectively suppressed. As a result, according to the magnetic resin composition of the fourth embodiment, not only is the injection moldability excellent, but also the relative magnetic permeability is excellent, and heat resistance, heat aging resistance, and rust prevention effect can be achieved.

(Fifth Embodiment)

The magnetic resin composition of the fifth embodiment contains the thermoplastic resin (A) and the magnetic particles (B) on which the silicon compound is deposited. In addition, as the magnetic particles (B), scale-like particles formed of an Fe-Si-Al alloy are used, and the mass ratio of the thermoplastic resin (A) to the Fe-Si-Al alloy, that is, thermoplastic resin (A)/Fe-Si-Al alloy is 10/90 to 15/85.

The thermoplastic resin (A) and the magnetic particles (B) on which the silicon compound is deposited are the same as in the first embodiment. The basic configuration (composition) and production method of magnetic resin composition of the fifth embodiment are similar to those of the first embodiment described above, except that the conditions (1) and (2) described in the first embodiment and the like (the conditions (1) and (2) described in the first embodiment when, in order to form the magnetic resin composition into a shape of a sheet, the sheet is prepared by uniformly applying a pressure of 15 MPa from above one main surface side of a sheet to be formed over 1 minute at a temperature of the melting point of the thermoplastic resin (A) + 15°C, and in a cross-sectional surface of the sheet, a region with a length of 0.125 mm and a thickness of 0.090 mm is subjected to image processing with a micrograph at a magnification of 2500.) are not essential.

The suitable range of the average particle size and the suitable range of the average thickness of the scale-like particles formed of the Fe-Si-Al alloy are the same as those in the first embodiment. In addition, the suitable range of the mass ratio of the thermoplastic resin (A) to the Fe-Si-Al alloy, that is, thermoplastic resin (A)/Fe-Si-Al alloy, and the suitable range of the content of each element in the Fe-Si-Al alloy is also the same as those in the first embodiment. In the magnetic particles (B), in order to improve the compatibility with the thermoplastic resin (A), a silicon compound such as silica must be deposited on a part of surface layer thereof. A silicon compound can be easily formed by using a silicon-based surface treatment agent. The silicon compound may be an organic surface treatment agent.

Suitable examples of silicon compounds include the compounds described in the first embodiment. Further, examples of the deposition treatment method of the silicon compound on the magnetic particles (B) include the method described in the first embodiment. The silicon compound used for the deposition treatment on the magnetic particles (B) is preferably a silane compound such as alkoxysilane or silazane, and more preferably alkoxysilane, from the viewpoint of reaction rate and yield with the magnetic particles (B). It is preferable to add 5 to 50 parts by mass, and more preferably 15 to 40 parts by mass, of the silicon-based surface treatment agent to 500 parts by mass of the magnetic particles (B).

Suitable examples of the thermoplastic resin (A) include the resins exemplified in the first embodiment. Polyamide resins are particularly preferable. Suitable examples of the melting point and weight average molecular weight of the thermoplastic resin (A) are also the same as in the first embodiment. The thermoplastic resin (A) can be used alone or in combination of two or more.

The magnetic resin composition of the fifth embodiment may further contain the antioxidant (D). The antioxidant (D) is the same as in the second embodiment. By adding the antioxidant (D) to this magnetic resin composition, it is possible to provide a magnetic resin composition exhibiting excellent injection moldability and having heat resistance, heat aging resistance, and rust prevention effect. Although the antioxidant (D) is not particularly limited, suitable examples thereof include the compounds described in the second embodiment. That is, examples thereof include phenolic antioxidants, phosphite antioxidants, sulfur-based antioxidants, hindered amine antioxidants, thioether antioxidants, and epoxy antioxidants. Among these, phenolic antioxidants and phosphite antioxidants are preferable. Antioxidants (D) can be used alone or in combination of two or more.

The magnetic resin composition of the fifth embodiment may further contain the metal deactivator (E). The metal deactivator (E) is the same as in the third embodiment. By adding the metal deactivator (E) to this magnetic resin composition, it is possible to provide a magnetic resin composition exhibiting excellent injection moldability and having heat resistance, heat aging resistance, and rust prevention effect. Although the metal deactivator (E) is not limited, suitable examples thereof include the compounds described in the third embodiment.

The magnetic resin composition of the fifth embodiment may contain other components within the scope of the present invention. Examples include solvents, flame retardants, ultraviolet absorbers, antistatic agents, antiblocking agents, colorants, dispersants, fillers, and the like. These can be used alone or in combination. Although the method for producing the magnetic resin composition of the fourth embodiment is not limited, suitable examples thereof include the method exemplified in the first embodiment. The magnetic shield sheet can be produced from the magnetic resin composition according to the fifth embodiment in the same manner as in the first embodiment.

In the fifth embodiment, by forming the magnetic resin composition such that scale-like particles that are formed of an Fe-Si-Al alloy are used as the magnetic particles (B), and the mass ratio of thermoplastic resin (A) to the Fe-Si-Al alloy is 10/90 to 15/85, it is possible to obtain a magnetic resin composition exhibiting excellent moldability and having high relative magnetic permeability even after injection molding. The magnetic shield sheet of the fifth embodiment is used as a single layer or multiple layers. In addition, the molded body can be used by being laminated with other sheets.

According to the magnetic resin composition according to the fifth embodiment, by subjecting the surface layer of the magnetic particles (B) to surface modification treatment, it is possible to improve the injection moldability, enhance the relative magnetic permeability, and achieve excellent rust prevention effect. As a result, according to the magnetic resin composition of the fifth embodiment, it is possible to provide a magnetic resin composition in which not only is the injection moldability excellent, but also the relative magnetic permeability is excellent, and heat resistance, heat aging resistance, and rust prevention effect can be achieved.

Examples

The present invention will be described in more detail by the following examples, but the following examples are not intended to limit the present invention at all. In addition, in the examples, unless otherwise specified, "part" indicates "part by mass" and "%" indicates "% by mass".

Raw materials used in the examples are as follows.

<Thermoplastic Resin>

· (A1) Polyamide resin: 6-nylon, Amilan CM-1007 (manufactured by Toray Industries, melting point: 225°C)
· (A2) Polycarbonate resin: PC, Iupilon E2000 (manufactured by MEP, melting point: 220°C)
· (A3) Styrene resin: GPPS, HF77 (manufactured by Japan Polystyrene Inc., melting point: 240°C)
· (A4) Polyester resin: MA-2101M (manufactured by Unitika Ltd., melting point: 166°C)

<Magnetic Particles>

· (B1) Sendust: average particle size of 50 μm, thickness of 1 μm, scale-like.
· (B2) Sendust: average particle size of 80 μm, thickness of 1 μm, scale-like.
· (B3) Sendust: average particle size of 50 μm, thickness of 1 μm, scale-like, TEOS treatment.
· (B4) Sendust: average particle size of 50 μm, thickness of 1 μm, scale-like, polysilazane treatment.
· (B5) Sendust: average particle size of 50 μm, spherical.
· (B6) Sendust: average particle size of 50 μm, thickness of 1 μm, scale-like, methicone treatment.
· (B7) Sendust: average particle size of 50 μm, thickness of 1 μm, scale-like, TEOS treatment.
· (B8) Sendust: average particle size of 50 μm, thickness of 1 μm, scale-like, TEOS treatment.

The average particle size is the D50 average particle size.

<Lubricant>

· (C1) Ester-based lubricant: pentaerythritol tetrastearate
· (C2) Carboxylic acid amide wax: Light Amide WH-215 (manufactured by Kyoeisha Chemical Co., Ltd.)
· (C3) Carboxylic acid amide wax: Light Amide WH-255 (manufactured by Kyoeisha Chemical Co., Ltd.)

<Antioxidant>

· (D1) Irganox 1010 (manufactured by BASF), hindered phenolic antioxidant
· (D2) ADK STAB AO-80 (manufactured by ADEKA Corporation), semi-hindered phenolic antioxidant
· (D3) ADK STAB PEP-36 (manufactured by ADEKA Corporation), phosphite antioxidant

<Metal Deactivator>

· (E1) ADK STAB CDA-1 (manufactured by AdEKA Corporation), salicylic acid derivative

· (E2) ADK STAB CDA-10 (manufactured by ADEKA Corporation), hydrazide derivative

· (E3) Naugard XL-1 (manufactured by AccuStandard Inc.), oxalic acid derivative

<Others>

· (F1) CB100 (manufactured by Nippon Graphite industries, average particle size: 80 $\mu$m)
· (F2) Carbon black #30 (manufactured by Mitsubishi Chemical Corporation, average particle size: 30 nm)

(Method for Producing Sendust (B3))

500 parts by mass of Sendust (B1), 15 parts by mass of tetraethoxysilane (TEOS), 500 parts by mass of isopropyl alcohol, and 65 parts by mass of water were mixed and stirred at 25°C for 3 hours. After that, 1 part by mass of 28% ammonia water was added to adjust the pH to 9.5, stirred at 50°C for 5 hours, and dried at 120°C for 3 hours to obtain the Sendust (B3) in which a silicon compound was deposited on the surface.

(Method for Producing Sendust (B4))

500 parts by mass of Sendust (B1), 15 parts by mass of perhydropolysilazane (Aquamica NP-110), and 100 parts by mass of dibutyl ether were mixed and stirred at 25°C for 3 hours. Then, the mixture was stirred at 70°C for 5 hours, and was dried at 120°C for 3 hours to obtain the Sendust (B4) in which the silicon compound was deposited on the surface.

(Method for Producing Sendust (B6))

500 parts by mass of Sendust (B1), 15 parts by mass of methyl hydrogen silicone oil, and 500 parts by mass of isopropyl alcohol were mixed and stirred at 25°C for 3 hours. Then, the mixture was stirred at 70°C for 5 hours, and was dried at 120°C for 3 hours to obtain the Sendust (B6) in which the silicon compound was deposited on the surface.

(Method for Producing Sendust (B7))

500 parts by mass of Sendust (B 1), 5 parts by mass of tetraethoxysilane (TEOS), 500 parts by mass of isopropyl alcohol, and 65 parts by mass of water were mixed and stirred at 25°C for 3 hours. After that. 1 part by mass of 28% ammonia water was added to adjust the pH to 9.5, stirred at 50°C for 5 hours, and dried at 120°C for 3 hours to obtain the Sendust (B7) in which a silicon compound was deposited on the surface.

(Method for Producing Sendust (B8))

500 parts by mass of Sendust (B1), 25 parts by mass of tetraethoxysilane (TEOS), 500 parts by mass of isopropyl alcohol, and 65 parts by mass of water were mixed and stirred at 25°C for 3 hours. After that, 1 part by mass of 28% ammonia water was added to adjust the pH to 9.5, stirred at 50°C for 5 hours, and dried at 120°C for 3 hours to obtain the Sendust (B8) in which a silicon compound was deposited on the surface.

[Example 1]

(Production of Magnetic Resin Composition 1)

15% polyamide resin (A1) and 85% Sendust (B1) were weighed, put into an open kneader, and kneaded at 260°C for 10 minutes. Then, the mixture was passed through a feeder ruder and pelletized to obtain the magnetic resin composition 1 in the form of pellets. Then, the relative magnetic permeability and the area ratio and number of the magnetic particles (B) were measured by the following methods. The results are shown in Table 4.

(Measurement of Relative Magnetic Permeability of Magnetic Resin Composition)

In order to form the obtained pellet-like magnetic resin composition 1 into a shape of a sheet, the magnetic resin composition 1 was uniformly pressed with a pressure of 15 MPa from one main surface of the sheet over 1 minute at a temperature of the melting point of the thermoplastic resin (A) + 15°C (240°C) to prepare a pressed sheet with a length of 200 mm, a width of 200 mm, and a thickness of 1.0 mm. After that, the pressed sheet was processed into a shape of a ring with an outer diameter of 11.0 mm, an inner diameter of 6.5 mm, and a thickness of 1.0 mm, and by using an impedance analyzer (E4990A, manufactured by Keysight Technologies), the inductance at a frequency f of 1 MHz was measured, and the relative magnetic permeability was measured by the short-circuit coaxial tube method. The evaluation criteria were as follows.

+++: 150 or more.
++: 100 or more and less than 150.
+: 50 or more and less than 100.
NG: less than 50

(Measurement of Area Ratio and Number of Magnetic Particles (B) of Pressed Sheet of Magnetic Resin Composition)

In order to form the obtained pellet-like magnetic resin composition 1 into a shape of a sheet, the magnetic resin composition 1 was uniformly pressed with a pressure of 15 MPa from one main surface of the sheet over 1 minute at a temperature of the melting point of the thermoplastic resin (A) + 15°C (240°C) to prepare a pressed sheet with a length of 200 mm, a width of 200 mm, and a thickness of 1.0 mm. Then, a cross-sectional surface was prepared at the center of the sheet, and 20% of the end part of the cross-sectional surface was cut. Then, the obtained cross-sectional surface was measured at 50 locations with a video microscope VHX7000 (manufactured by Keyence Corporation, particle analysis mode) with a viewing angle of 2500 times (a region with a thickness of 0.090 mm and a length of 0.125 mm), and was subjected to image processing. Then, the area ratio (average value) of the magnetic particles (B) subjected to image processing and the number (average value) of the magnetic particles (B) subjected to image processing were obtained.

(Heat Resistant)

A pressed sheet piece of the magnetic resin composition was heated with a thermogravimetric/differential thermal analyzer (TG-DTA) in a dry air atmosphere in a temperature range of 40°C to 500°C at a temperature rising speed of 5°C/min, weight loss was measured, and heat resistance was evaluated. The evaluation criteria are as follows. In the weight attenuation curve obtained by the above measurement, the temperature at the intersection of the tangent line at the starting point temperature of the weight change and the tangent line at the temperature at which the thermal weight loss rate (%/°C) is maximum is taken as the decomposition start temperature.

+++: The decomposition start temperature is equal to or higher than the melting point of the thermoplastic resin (A) + 50°C.

++: The decomposition start temperature is lower than the melting point of the thermoplastic resin (A) + 50°C, and equal to or higher than the melting point + 40°C.

+: The decomposition start temperature is lower than the melting point of the thermoplastic resin (A) + 40°C, and equal to or higher than the melting point + 20°C.

NG: The decomposition start temperature is lower than the melting point of the thermoplastic resin (A) + 20°C.

(Heat Aging Resistance)

A pressed sheet piece of the magnetic resin composition was heat-treated at 150°C for 10 days in a blower dryer. Using the following formula, the impact strength against the pressed sheet before heating was used to determine the impact strength after the heating test, and the retention rate was determined. Impact strength was obtained based on JIS K 7111:1996 using a pendulum type impact tester.

$$\text{Retention rate } [\%] = t1/t0 * 100$$

In the formula, t0 is the impact strength of the pressed sheet before heating, and t1 is the impact strength of the pressed sheet after heating.

The evaluation criteria are as follows.

+++: Retention rate is 100%.

++: Retention rate is 50% or more and less than 100%.

+: Retention rate is less than 50%.

NG: Retention rate cannot be calculated.

(Rust Prevention Effect)

A pressed sheet piece of the magnetic resin composition was placed in a 50 mL glass container filled with pure water and left in a thermostatic chamber at 90°C for 24 hours. After that, rust on the magnetic particles (B) was visually observed. The evaluation criteria are as follows.

+++: No rust was observed.

++: No rust was observed, but the surface of the magnetic particles (B) lacked gloss and became cloudy.

+: Some magnetic particles (B) were found to be slightly rusted, but the entire surface is slightly browned.

NG: Some magnetic particles (B) were found to be rusted, and the entire surface was discolored to yellowish brown.

[Examples 2 to 34]

The raw materials and incorporated amounts of the thermoplastic resin (A), the magnetic particles (B), and the lubricant (C) of Example 1 were changed to those illustrated in Tables 1 and 2, the same procedures as in Example 1 were performed to prepare each of the magnetic resin compositions 2 to 34, pressed sheets were prepared in the same manner as in Example 1, and the relative magnetic permeability and the area ratio and number of the magnetic particles (B) were measured. The evaluation results are shown in Table 4. The incorporated amount of the surface-treated Sendust (B3) or the like is the mass of the scale-like particles formed of the Fe-Si-Al alloy, excluding the mass of the deposition layer of the surface layer. The same shall apply hereinafter.

[Comparative Example 1]

(Production of Magnetic Resin Composition 35)

15% thermoplastic resin (A) and 85% Sendust (B1) were weighed, put into a pressure kneader, and kneaded at 260°C for 10 minutes. Then, the mixture was passed through a feeder ruder and pelletized to obtain the magnetic resin composition 35 in the form of pellets. Otherwise, a pressed sheet was prepared in the same manner as in Example 1, and the relative magnetic permeability and the area ratio and number of the magnetic particles (B) were measured. The evaluation results are shown in Table 6.

[Comparative Examples 2 and 3]

(Production of Magnetic Resin Compositions 36 and 37)

The magnetic resin compositions 36 and 37 were prepared using a pressure kneader in the same manner as in Comparative Example 1 except that the raw materials and incorporated amounts were changed as illustrated in Table 3. After that, a pressed sheet was prepared in the same manner as in Example 1, and the relative magnetic permeability and the area ratio and number of the magnetic particles (B) were measured. The evaluation results are shown in Table 6.

[Comparative Examples 4 to 10]

(Production of Magnetic Resin Compositions 38 to 44)

Magnetic resin compositions 38 to 44 were prepared using an open kneader in the same manner as in Example 1 when the raw materials and incorporated amounts were changed as illustrated in Table 3. After that, a pressed sheet was prepared in the same manner as in Example 1, and the relative magnetic permeability and the area ratio and number of the magnetic particles (B) were measured. The evaluation results are shown in Table 6.

[Comparative Example 11]

85 parts of the magnetic particles (B1), 15 parts of the thermoplastic resin (A4), and 200 parts of toluene as a solvent were mixed in a planetary mixer to obtain a magnetic resin composition in slurry form. The obtained magnetic resin composition was formed into a film with a thickness of 100 μm by a doctor blade method, and the solvent was removed to obtain a magnetic sheet. The obtained magnetic sheet was evaluated in the same manner as the pressed sheet of Example 1.

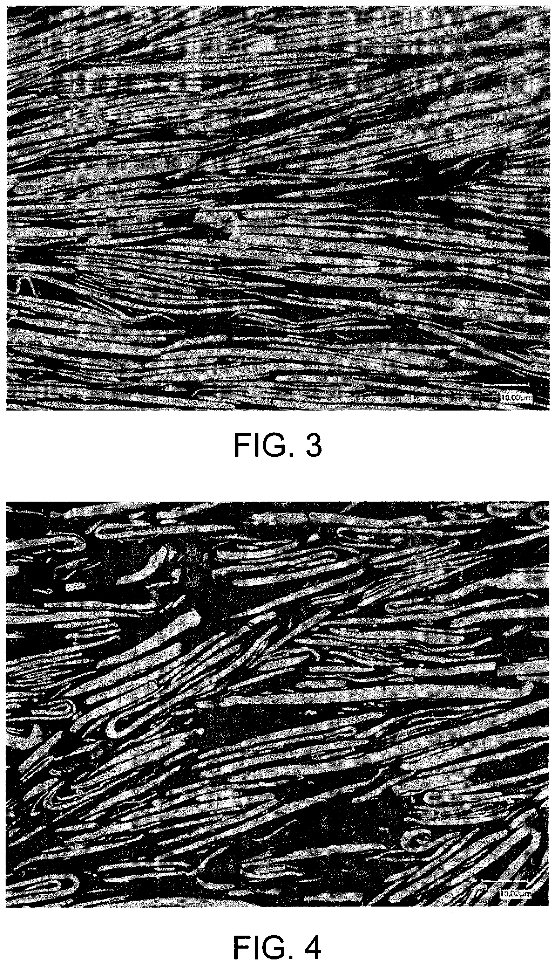

Fig. 3 illustrates a micrograph of the cross section of the cut part of the pressed sheet of Example 3, and Fig. 4 illustrates a micrograph of the cross section of the cut part of the pressed sheet of Comparative Example 2. As illustrated in the drawing, by using a sheet having a high filling rate of the magnetic particles (B) and a small number of the magnetic particles (B), it is possible to obtain a sheet having moldability that makes thick film formation possible and having high relative magnetic permeability.

(Measurement of Melt Viscosity)

The melt viscosities of the magnetic resin compositions according to each of the examples and comparative examples were measured using a melt viscosity measurement device (Capilograph 1C manufactured by Toyo Seiki Seisaku-sho, Ltd.). The measurement temperature was 260°C (200°C for Example 9 and Comparative Example 11), and the melt viscosity at a shear rate of 304 [1/s] of this magnetic resin composition was determined. In Comparative Example 11, the melt viscosity was determined after crushing the magnetic sheet obtained from the magnetic resin composition of Comparative Example 11.

  +++: Less than 3000 Pa·s
  ++: 3000 Pa s or more and less than 5000 Pa s
  +: 5000 Pa s or more and less than 10000 Pa s
  NG: 10000 Pa s or more

(Preparation of Molded Body for Magnetic Shields)

The magnetic resin compositions 1 to 44 of each of the examples and comparative examples 1 to 10 were injection molded at 270°C using an injection molding machine (IS-100F type manufactured by Toshiba Machine Co., Ltd., maximum injection molding pressure: 200 MPa), and the molded bodies for magnetic shields 1 to 44 having a rectangular parallelepiped shape with a length of 100 mm, a width of 100 mm, and a thickness of 3 mm were prepared. The mold used was a rectangular parallelepiped with a length of 100 mm, a width of 100 mm, and a thickness of 3 mm, and the gate diameter was 1 mm × 3 mm. The mold clamping pressure was set to 50 t.

The pressure applied to the magnetic resin composition during injection molding of each of the examples and comparative examples was the minimum pressure that makes molding possible without causing sink marks or the like, which will be described later.

For Comparative Example 11, the magnetic sheet obtained from the magnetic resin composition according to Comparative Example 11 was crushed, and processed into a shape that could be supplied to an injection molding machine to prepare a rectangular parallelepiped magnetic shield sheet with 100 mm × 100 mm × 3 mm using the injection molding machine in the same manner as in Example 1.

(Evaluation of Injection Moldability of Molded Body for Magnetic Shields)

The magnetic resin compositions of each of the examples and comparative examples were molded under different injection molding pressures and evaluated according to the following evaluation criteria. In the present specification, the term "sink marks or the like" refers to irregularities on the surface of an injection molded body, generation of air bubbles, and defective molding due to insufficient filling, and was determined visually. Evaluation results are illustrated in Tables 5 and 7.

+++: Even when the injection molding is performed with the injection molding pressure which is less than 50% of the maximum injection molding pressure, molding can be performed without sink marks or the like.

++: When the injection molding pressure is less than 50% of the maximum injection molding pressure, sink marks or the like are generated, but when the injection molding pressure is 50% or more and less than 75%, molding can be performed without sink marks or the like.

+: When the injection molding pressure is 50% or more and less than 75% of the maximum injection molding pressure, sink marks or the like are generated, but when the injection molding pressure is 75% or more and less than 95%, molding can be performed without sink marks or the like.

NG: When the injection molding is performed with the injection molding pressure which is 75% or more and less than 95% of the maximum injection molding pressure, sink marks or the like are generated, but when the injection molding is performed with the injection molding pressure which is 95% or more, molding can be performed without sink marks or the like or molding cannot be performed.

(Measurement of Area Ratio and Number of Magnetic Particles (B) of Molded Bodies for Magnetic Shields (Sheet))

In each of the examples and comparative examples, a cross-sectional surface is prepared at the center of each of the rectangular parallelepiped molded bodies for magnetic shields, which were prepared under a pressure that does not cause sink marks or the like (pressure within the range corresponding to the evaluation result of injection moldability in Tables 5 and 7), and 20% of the end part of the cross-sectional surface was cut. Then, the obtained cross-sectional surface was measured at 50 locations with a video microscope VHX7000 (manufactured by Keyence Corporation, particle analysis mode) with a viewing angle of 2500 times (a region with a thickness of 0.090 mm and a length of 0.125 mm), and was subjected to image processing. Then, the area ratio (average value) of the magnetic particles (B) subjected to image processing and the number (average value) of the magnetic particles (B) subjected to image processing were obtained.

(Measurement of Relative Magnetic Permeability of Molded Body for Magnetic Shields)

In each of the examples and comparative examples, each of the rectangular parallelepiped molded bodies for magnetic shields, which was prepared under a pressure that does not cause sink marks or the like (pressure within a range corresponding to the evaluation results of injection moldability in Tables 5 and 7), was processed into a donut shape with an outer diameter of 11.0 mm, an inner diameter of 6.5 mm, and a thickness of 3.0 mm, and by using an impedance analyzer (E4990A, manufactured by Keysight Technologies), the inductance at a frequency f of 1 MHz was measured, and the relative magnetic permeability was measured by the short-circuit coaxial tube method. Relative magnetic permeability was evaluated according to the following evaluation criteria. Evaluation results are illustrated in Tables 5 and 7.

+++: 150 or more
++: 100 or more and less than 150
+: 50 or more and less than 100
NG: less than 50

[Table 1]

| | | Examples | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Magnetic resin composition | | 1 | 2 | 3 | 4 | 5 | 6 | 7 | 8 | 9 | 10 | 11 | 12 | 13 | 14 | 15 |
| Thermoplastic resin | (A1) | 15 | 14 | 13 | 12 | 11 | 10 | | | | 13 | | 12.9 | 12.7 | 12.5 | 12 |
| | (A2) | | | | | | | 14 | | | | 14 | | | | |
| | (A3) | | | | | | | | 13 | | | | | | | |
| | (A4) | | | | | | | | | 14 | | | | | | |
| Magnetic particles | (B1) | 85 | 86 | 87 | 88 | 89 | 90 | | 87 | | | | 87 | 87 | 87 | 87 |
| | (B2) | | | | | | | 86 | | 86 | | | | | | |
| | (B3) | | | | | | | | | | 87 | | | | | |
| | (B4) | | | | | | | | | | | 86 | | | | |
| | (B5) | | | | | | | | | | | | | | | |
| | (B6) | | | | | | | | | | | | | | | |
| | (B7) | | | | | | | | | | | | | | | |
| | (B8) | | | | | | | | | | | | | | | |
| Lubricant | (C1) | | | | | | | | | | | | 0.1 | | | 1 |
| | (C2) | | | | | | | | | | | | | 0.3 | | |
| | (C3) | | | | | | | | | | | | | | 0.5 | |

[Table 2]

| | | Examples | | | | | | | | | | | | | | | | | | |
|---|---|---|---|---|---|---|---|---|---|---|---|---|---|---|---|---|---|---|---|---|
| | | 16 | 17 | 18 | 19 | 20 | 21 | 22 | 23 | 24 | 25 | 26 | 27 | 28 | 29 | 30 | 31 | 32 | 33 | 34 |
| Magnetic resin composition | | 16 | 17 | 18 | 19 | 20 | 21 | 22 | 23 | 24 | 25 | 26 | 27 | 28 | 29 | 30 | 31 | 32 | 33 | 34 |
| Thermoplastic resin | (A1) | 12.8 | 12.8 | 12.8 | 12.8 | 12.6 | 12.6 | 12.6 | 12.6 | 12.6 | 13 | 12.6 | 12.5 | 12.7 | 12.7 | 12.9 | 12.5 | 12.4 | 13 | 13 |
| | (A2) | | | | | | | | | | | | | | | | | | | |
| | (A3) | | | | | | | | | | | | | | | | | | | |
| | (A4) | | | | | | | | | | | | | | | | | | | |
| Magnetic particles | (B1) | 87 | 87 | | | 87 | | | | | | | 87 | 87 | 87 | | | | | |
| | (B2) | | | | | | | | | | | | | | | | | | | |
| | (B3) | | | 87 | 87 | | 87 | 87 | 87 | | | | | | | 87 | 87 | 87 | | |
| | (B4) | | | | | | | | | 87 | | | | | | | | | | |
| | (B5) | | | | | | | | | | | | | | | | | | | |
| | (B6) | | | | | | | | | | 87 | 87 | | | | | | | | |
| | (B7) | | | | | | | | | | | | | | | | | | 87 | |
| | (B8) | | | | | | | | | | | | | | | | | | | 87 |
| Lubricant | (C1) | | | | | | | | | | | | 0.1 | 0.1 | 0.1 | | | | | |
| | (C2) | | | | | | | | | | | | | | | | | | | |
| | (C3) | | | | | | | | | | | | | | | | | | | |
| Antioxidant | (D1) | 0.2 | | 0.2 | | 0.2 | 0.2 | | 0.2 | | | 0.2 | 0.2 | 0.2 | | 0.1 | 0.5 | | | |
| | (D2) | | | | | | | 0.2 | | | | | | | | | | 0.2 | | |
| | (D3) | | | | | | | | 0.2 | | | | | | | | | 0.2 | | |
| Metal deactivator | (E1) | | 0.2 | | 0.2 | 0.2 | 0.2 | | | | | 0.2 | | | | | | | | |
| | (E2) | | | | | | | 0.2 | | | | | 0.2 | | 0.2 | | | 0.2 | | |
| | (E3) | | | | | | | | 0.2 | 0.2 | | | | | | | | | | |

[Table 3]

| | | Comparative Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Magnetic resin composition | | 35 | 36 | 37 | 38 | 39 | 40 | 41 | 42 | 43 | 44 | 45 |
| Thermoplastic resin | | 15 | 13 | 10 | 16 | 9 | 13 | 100 | 0 | 10 | 15 | |
| | (A2) | | | | | | | | | | | |
| | (A3) | | | | | | | | | | | |
| | (A4) | | | | | | | | | | | 15 |
| Magnetic particles | (B1) | 85 | 87 | 90 | 84 | 91 | | 0 | 100 | 85 | 80 | 85 |
| | (B2) | | | | | | | | | | | |
| | (B3) | | | | | | | | | | | |
| | (B4) | | | | | | | | | | | |
| | (B5) | | | | | | 87 | | | | | |
| | (B6) | | | | | | | | | | | |
| | (B7) | | | | | | | | | | | |
| | (B8) | | | | | | | | | | | |
| Lubricant | (CI) | | | | | | | | | | | |
| | (C2) | | | | | | | | | | | |
| | (C3) | | | | | | | | | | | |
| Antioxidant | (D1) | | | | | | | | | | | |
| | (D2) | | | | | | | | | | | |
| | (D3) | | | | | | | | | | | |
| Metal deactivator | (E1) | | | | | | | | | | | |
| | (E2) | | | | | | | | | | | |
| | (E3) | | | | | | | | | | | |
| Others | (F1) | | | | | | | | | | 5 | |
| | (F2) | | | | | | | | | | | 5 | |

[Table 4]

| | | Magnetic resin composition | Pressed Sheet of Magnetic Resin Composition | | | | | |
|---|---|---|---|---|---|---|---|---|
| | | | Condition (1)[*1] (%) | Condition (2)[*2] (number) | Relative magnetic permeability | Heat resistance | Heat aging resistance | Rust prevention effect |
| Examples | 1 | 1 | 48.3 | 275 | ++ | + | + | + |
| | 2 | 2 | 50.4 | 290 | +++ | + | + | + |
| | 3 | 3 | 52.7 | 302 | +++ | + | + | + |
| | 4 | 4 | 55.0 | 316 | +++ | + | + | + |
| | 5 | 5 | 57.1 | 342 | +++ | + | + | + |
| | 6 | 6 | 60.0 | 371 | +++ | + | + | + |
| | 7 | 7 | 49.9 | 308 | +++ | + | + | + |
| | 8 | 8 | 51.2 | 399 | +++ | + | + | + |
| | 9 | 9 | 49.1 | 339 | +++ | + | + | + |
| | 10 | 10 | 53.1 | 257 | +++ | ++ | ++ | +++ |
| | 11 | 11 | 48.8 | 220 | +++ | ++ | ++ | +++ |
| | 12 | 12 | 52.2 | 298 | +++ | + | + | + |
| | 13 | 13 | 52.5 | 301 | +++ | + | + | + |
| | 14 | 14 | 51.7 | 310 | +++ | + | + | + |
| | 15 | 15 | 51.6 | 321 | +++ | + | + | + |
| | 16 | 16 | 52.0 | 398 | +++ | + | + | + |
| | 17 | 17 | 52.3 | 394 | +++ | ++ | + | + |
| | 18 | 18 | 53.2 | 252 | +++ | ++ | ++ | ++ |
| | 19 | 19 | 53.1 | 255 | +++ | ++ | ++ | ++ |
| | 20 | 20 | 52.2 | 368 | +++ | ++ | ++ | + |
| | 21 | 21 | 53.4 | 260 | +++ | +++ | +++ | +++ |
| | 22 | 22 | 53.3 | 257 | +++ | +++ | +++ | +++ |
| | 23 | 23 | 53.5 | 262 | +++ | ++ | ++ | +++ |
| | 24 | 24 | 53.1 | 272 | +++ | +++ | +++ | +++ |
| | 25 | 25 | 52.4 | 303 | +++ | ++ | ++ | ++ |
| | 26 | 26 | 52.5 | 299 | +++ | ++ | ++ | ++ |
| | 27 | 27 | 52.3 | 370 | +++ | +++ | +++ | +++ |
| | 28 | 28 | 52.1 | 384 | +++ | ++ | ++ | ++ |
| | 29 | 29 | 52.3 | 392 | +++ | ++ | ++ | ++ |
| | 30 | 30 | 53.4 | 261 | +++ | ++ | ++ | +++ |
| | 31 | 31 | 53.1 | 257 | +++ | + | ++ | +++ |
| | 32 | 32 | 53.6 | 262 | +++ | +++ | +++ | +++ |
| | 33 | 33 | 52.9 | 300 | +++ | + | + | + |
| | 34 | 34 | 53.2 | 255 | +++ | ++ | ++ | +++ |

*1: A proportion of the total area of the magnetic particles (B) subjected to image

processing to the area of the image processing region

*2: The number of magnetic particles (B) subjected to image processing

[Table 5]

| | | Magnetic resin composition | Melt viscosity | Injection molded body for magnetic shields | | | |
|---|---|---|---|---|---|---|---|
| | | | | Condition (3)[*3] (%) | Condition (4)[*4] (number) | Injection moldability | Relative magnetic permeability |
| Examples | 1 | 1 | + | 45.2 | 269 | ++ | ++ |
| | 2 | 2 | + | 49.1 | 283 | ++ | ++ |
| | 3 | 3 | + | 50.4 | 291 | ++ | ++ |
| | 4 | 4 | + | 53.2 | 298 | ++ | ++ |
| | 5 | 5 | + | 55.8 | 312 | ++ | ++ |
| | 6 | 6 | + | 57.9 | 349 | + | ++ |
| | 7 | 7 | + | 48.9 | 299 | ++ | ++ |
| | 8 | 8 | + | 50.1 | 367 | ++ | ++ |
| | 9 | 9 | + | 47.9 | 311 | ++ | ++ |
| | 10 | 10 | +++ | 52.1 | 239 | +++ | +++ |
| | 11 | 11 | +++ | 48.1 | 203 | +++ | +++ |
| | 12 | 12 | + | 49.9 | 267 | +++ | +++ |
| | 13 | 13 | + | 51.0 | 288 | +++ | +++ |
| | 14 | 14 | + | 50.4 | 301 | +++ | +++ |
| | 15 | 15 | + | 50.1 | 311 | +++ | +++ |
| | 16 | 16 | + | 50.2 | 378 | ++ | ++ |
| | 17 | 17 | + | 50.7 | 369 | ++ | ++ |
| | 18 | 18 | ++ | 52.8 | 230 | +++ | +++ |
| | 19 | 19 | ++ | 52.6 | 242 | +++ | +++ |
| | 20 | 20 | + | 51.1 | 347 | ++ | ++ |
| | 21 | 21 | +++ | 53.0 | 254 | +++ | +++ |
| | 22 | 22 | +++ | 52.8 | 248 | +++ | +++ |
| | 23 | 23 | +++ | 52.9 | 256 | +++ | +++ |
| | 24 | 24 | +++ | 52.2 | 260 | +++ | +++ |
| | 25 | 25 | ++ | 51.4 | 272 | ++ | ++ |
| | 26 | 26 | ++ | 52.0 | 268 | ++ | ++ |
| | 27 | 27 | +++ | 51.1 | 367 | +++ | +++ |
| | 28 | 28 | ++ | 51.2 | 357 | +++ | +++ |
| | 29 | 29 | ++ | 52.0 | 361 | +++ | +++ |
| | 30 | 30 | +++ | 53.0 | 248 | +++ | +++ |
| | 31 | 31 | +++ | 52.9 | 250 | +++ | +++ |
| | 32 | 32 | +++ | 52.1 | 229 | +++ | +++ |
| | 33 | 33 | + | 50.5 | 271 | ++ | ++ |
| | 34 | 34 | +++ | 52.1 | 244 | +++ | +++ |

*3: A proportion of the total area of the magnetic particles (B) subjected to image processing to the area of the image processing region

*4: The number of magnetic particles (B) subjected to image processing

[Table 6]

| | | Magnetic resin Composition | Pressed sheet of magnetic resin composition, and the like | | | | | |
|---|---|---|---|---|---|---|---|---|
| | | | Condition (1)[*1] (%) | Condition (2)[*2] (number) | Relative magnetic permeability | Heat resistance | Heat aging resistance | Rust prevention effect |
| Comparative Examples | 1 | 35 | 35.6 | 553 | NG | + | + | + |
| | 2 | 36 | 37.9 | 601 | NG | + | + | + |
| | 3 | 37 | 39.3 | 620 | NG | + | + | + |
| | 4 | 38 | 46.6 | 250 | NG | + | + | + |
| | 5 | 39 | - | - | - | - | - | - |
| | 6 | 40 | 37.6 | 220 | NG | + | + | + |
| | 7 | 41 | 0.0 | 0 | - | +++ | ++ | +++ |
| | 8 | 42 | - | - | - | - | - | - |
| | 9 | 43 | 39.2 | 266 | NG | + | + | + |
| | 10 | 44 | 37.3 | 182 | NG | + | + | + |
| | 11 | 45 | 49.2 | 621 | + | + | + | + |

*1: A proportion of the total area of the magnetic particles (B) subjected to image processing to the area of the image processing region

*2: The number of magnetic particles (B) subjected to image processing

[Table 7]

| | | Magnetic resin Composition | Melt viscosity | Injection molded body for magnetic shields, and the like | | | |
|---|---|---|---|---|---|---|---|
| | | | | Condition (3)[*3] (%) | Condition (4)[*4] (number) | Injection moldability | Relative magnetic permeability |
| Comparative Examples | 1 | 35 | + | 32.1 | 510 | ++ | NG |
| | 2 | 36 | + | 35.2 | 589 | ++ | NG |
| | 3 | 37 | + | 36.1 | 603 | ++ | NG |
| | 4 | 38 | + | 40.2 | 223 | ++ | NG |
| | 5 | 39 | NG | - | - | NG | NG |
| | 6 | 40 | + | 33.1 | 198 | ++ | NG |
| | 7 | 41 | +++ | 0.0 | 0 | +++ | - |
| | 8 | 42 | NG | - | - | NG | NG |
| | 9 | 43 | NG | 38.1 | 248 | NG | NG |
| | 10 | 44 | NG | 35.6 | 155 | + | NG |
| | 11 | 45 | + | 44.1 | 610 | + | NG |

*3: A proportion of the total area of the magnetic particles (B) subjected to image processing to the area of the image processing region

*4: The number of magnetic particles (B) subjected to image processing

From the results illustrated in Tables 4 to 7, it was confirmed that the examples using the magnetic resin composition of the present invention obtained molded bodies exhibiting excellent relative magnetic permeability. Furthermore, it was confirmed that the injection moldability was excellent. Comparative Example 1, which does not satisfy the conditions (1) and (2), is a resin composition having the same ingredients as in Example 1, but it was confirmed that the relative magnetic permeability was not a satisfactory value. It was confirmed that Comparative Example 2, which has the same ingredients as Example 3, had similar results.

[Retention Rate of Relative Magnetic Permeability]

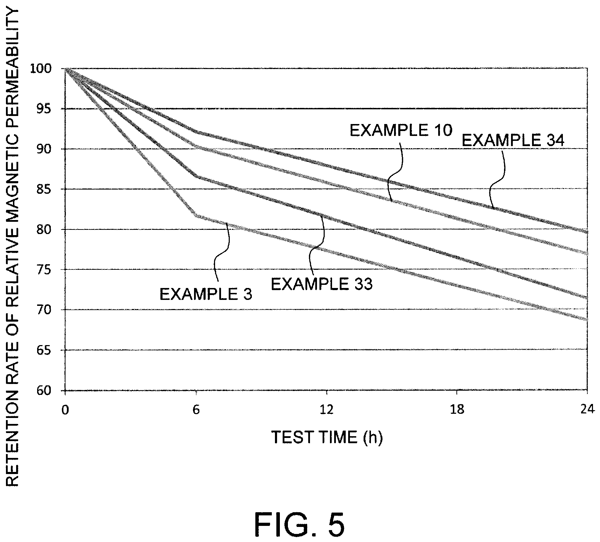

The relative magnetic permeabilities of the pressed sheet pieces of Examples 3, 10, 33, and 34 were respectively obtained at the initial stage, after being immersed in hot water at 90°C for 6 hours, and after being immersed in hot water at 90°C for 24 hours, and the retention rate of relative magnetic permeability was obtained. The results are shown in Fig. 5.
Example 3 in Fig. 5 is an example using the magnetic particles (Sendust (B1)) that have not been surface-treated, and Example 10 is an example using 3 parts by mass of TEOS with respect to 100 parts by mass of the magnetic particles (Sendust (B3)). In Example 33, the magnetic resin composition was prepared by the same method as in Example 10 except that the magnetic particles (Sendust (B7)) are used, and in Example 34, the magnetic resin composition was prepared by the same method as Example 10 except that the magnetic particles (Sendust (B8)) are used. As illustrated in the drawing, it was confirmed that, by performing the surface treatment of the magnetic particles (B), the retention retention rate of the relative magnetic permeability was enhanced. Moreover, the surface treatment of the magnetic particles (B) was found to have a rust prevention effect.

[Appendix]

The present specification also discloses the invention of the following technical ideas grasped from the above embodiments.

(Appendix 1)

A magnetic resin composition containing a thermoplastic resin (A), a magnetic particles (B), a lubricant (C), an antioxidant (D), and a metal deactivator (E), in which, as the magnetic particles (B), scale-like particles formed of an Fe-Si-Al alloy are used, and the mass ratio of the thermoplastic resin (A) to the Fe-Si-Al alloy, that is, thermoplastic resin (A)/Fe-Si-Al alloy is 10/90 to 15/85.

(Appendix 2)

A magnetic resin composition containing the thermoplastic resin (A) and the magnetic particles (B), in which, as the magnetic particles (B), scale-like particles formed of an Fe-Si-Al alloy are used, and the mass ratio of the thermoplastic resin (A) to the Fe-Si-Al alloy, that is, thermoplastic resin (A)/Fe-Si-Al alloy is 10/90 to 15/85, and a silicon compound is deposited on at least a part of a surface layer of the magnetic particles (B).

(Appendix 3)

The magnetic resin composition according to Appendix 2, further containing an antioxidant (D).

(Appendix 4)

The magnetic resin composition according to Appendix 2 or 3, further containing a metal deactivator (E).

(Appendix 5)

A magnetic resin composition containing a thermoplastic resin (A) and magnetic particles (B), in which, as the magnetic particles (B), scale-like particles that are formed of an Fe-Si-Al alloy are used, and a mass ratio of the thermoplastic resin (A) to the Fe-Si-Al alloy, that is, thermoplastic resin (A)/Fe-Si-Al alloy is 10/90 to 15/85, and conditions (1) and (2) described below are satisfied when, in order to form the magnetic resin composition into a shape of a sheet, the sheet is prepared by uniformly applying a pressure of 15 MPa from above one main surface side of a sheet to be formed over 1 minute at a 240°C, and in a cross-sectional surface of the sheet, a region with a length of 0.125 mm and a thickness of 0.090 mm is subjected to image processing with a micrograph at a magnification of 2500.

   (1) A total area of the magnetic particles (B) subjected to image processing is 40% to 65% of the area of the image processing region.
   (2) The number of the magnetic particles (B) subjected to image processing is 200 to 500.

(Appendix 6)

The magnetic resin composition according to Appendix 5, further containing a lubricant (C).

(Appendix 7)

The magnetic resin composition according to Appendix 5 or 6, in which a silicon compound is deposited on at least a part of a surface layer of the magnetic particles (B).

(Appendix 8)

The magnetic resin composition according to any one of Appendices 5 to 7, in which the thermoplastic resin (A) contains a polyamide resin.

(Appendix 9)

The magnetic resin composition according to any one of Appendices 5 to 8, further containing an antioxidant (D).

(Appendix 10)

The magnetic resin composition according to any one of Appendices 5 to 9, further containing a metal deactivator (E).

(Appendix 11)

A magnetic shield sheet, which is formed by using the magnetic resin composition according to any one of Appendices 1 to 10.

[Industrial Applicability]

The magnetic shield sheet and the magnetic resin composition of the present invention can be used for general applications requiring magnetic shielding properties. For example, the magnetic shield sheet and the magnetic resin composition can be suitably used as a magnetic shield sheet on the power reception coil side of a wireless power transmission system using magnetic field resonance type contactless power transmission. Moreover, the magnetic shield sheet and the magnetic resin composition can be suitably used as a magnetic shield sheet to be mounted on an antenna that uses radio waves in the VIIF band. In addition, the magnetic resin composition of the present invention can also be used by forming a pattern such as a microstrip line on a substrate.

This application claims priority based on Japanese application Japanese Patent Application No. 2020-119367 filed on July 10, 2020, and incorporates all of its disclosures herein.

**Claims**

1. A magnetic resin composition for injection molding comprising a thermoplastic resin (A) that has a melting point of 100°C to 400°C and magnetic particles (B). wherein

   as the magnetic particles (B), scale-like particles that are formed of an Fe-Si-Al alloy are used, and a mass ratio of the thermoplastic resin (A) to the Fe-Si-Al alloy, that is, thermoplastic resin (A)/Fe-Si-Al alloy is 10/90 to 15/85, and
   conditions (1) and (2) described below are satisfied when, in order to form the magnetic resin composition for injection molding into a shape of a sheet, the sheet is prepared by uniformly applying a pressure of 15 MPa from above one main surface side of a sheet to be formed over 1 minute at a temperature of the melting point of the thermoplastic resin (A) + 15°C, and in a cross-sectional surface in a thickness direction of the sheet, a region with a length of 0.125 mm and a thickness of 0.090 mm is subjected to image processing with a micrograph at a magnification of 2500:

      (1) a total area of the magnetic particles (B) subjected to image processing is 40% to 65% of the area of the image processing region,
      (2) a number of the magnetic particles (B) subjected to image processing is 200 to 500.

2. The magnetic resin composition for injection molding according to claim 1, wherein
   a silicon compound is deposited on at least a part of a surface layer of the magnetic particles (B).

3. The magnetic resin composition for injection molding according to claim 1 or 2, wherein
   the thermoplastic resin (A) comprises a polyamide resin.

4. The magnetic resin composition for injection molding according to any one of claims 1 to 3, further comprising an antioxidant (D).

5. The magnetic resin composition for injection molding according to any one of claims 1 to 4, further comprising a metal deactivator (E).

6. The magnetic resin composition for injection molding according to any one of claims 1 to 5, further comprising a lubricant (C).

7. An injection molded body for magnetic shields comprising a thermoplastic resin (A) that has a melting point of 100°C to 400°C and magnetic particles (B), comprising:

   an injection molded body of a magnetic resin composition in which, as the magnetic particles (B), scale-like particles that are formed of an Fe-Si-Al alloy are used, and a mass ratio of the thermoplastic resin (A) to the Fe-Si-Al alloy, that is, thermoplastic resin (A)/Fe-Si-Al alloy is 10/90 to 15/85;

a sheet-like part provided at least at a part thereof; and

a surface that satisfies conditions (3) and (4) described below when a region with a length of 0.125 mm and a thickness of 0.090 mm is subjected to image processing with a micrograph at a magnification of 2500 in a cross-sectional surface in a thickness direction of the sheet-like part:

(3) a total area of the magnetic particles (B) subjected to image processing is 40% to 65% of the area of the image processing region,

(4) a number of the magnetic particles (B) subjected to image processing is 200 to 500.

8. The injection molded body for magnetic shields according to claim 7, wherein a silicon compound is deposited on at least a part of a surface layer of the magnetic particles (B).

9. The injection molded body for magnetic shields according to claim 7 or 8, wherein the thermoplastic resin (A) comprises a polyamide resin.

10. The injection molded body for magnetic shields according to any one of claims 7 to 9, further comprising a lubricant (C).

11. The injection molded body for magnetic shields according to any one of claims 7 to 10, wherein the sheet-like part has an average thickness of 0.8 to 10 mm.

12. An injection molded body for magnetic shields, which is formed by using the magnetic resin composition according to any one of claims 1 to 6.

15MPa、240℃

FIG. 1A

FIG. 1B

FIG. 1C

60

Z
X
Y

IIb

IIb

61a

61b

# FIG. 2A

60a

61

Z
Y
X

62

54

53

# FIG. 2B

FIG. 3

FIG. 4

FIG. 5

<table>
<tr><td colspan="2">**INTERNATIONAL SEARCH REPORT**</td><td colspan="2">International application No.<br>PCT/JP2021/025806</td></tr>
</table>

A. CLASSIFICATION OF SUBJECT MATTER
B22F 1/02(2006.01)i; C08K 7/10(2006.01)i; C08L 77/00(2006.01)i; C08L
101/00(2006.01)i; C08J 5/18(2006.01)i; H01F 1/147(2006.01)i; H01F
1/26(2006.01)i; C08K 3/01(2018.01)i; B22F 3/00(2021.01)i; B22F
1/00(2006.01)i
FI:      H01F1/147 191; H01F1/26; B22F1/02 E; B22F1/00 Y; B22F3/00 B;
         C08L101/00; C08K7/10; C08K3/01; C08L77/00; C08J5/18 CFG
According to International Patent Classification (IPC) or to both national classification and IPC

B. FIELDS SEARCHED

Minimum documentation searched (classification system followed by classification symbols)
B22F1/00; B22F1/02; C08K7/10; C08L77/00; C08L101/00; C08J5/18; H01F1/147;
H01F1/26; C08K3/01; B22F3/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | CN 107964239 A (HANGZHOU QIANSHI TECHNOLOGY CO., LTD.) 27 April 2018 (2018-04-27) claims, paragraphs [0006]-[0011], examples 3, 4, 6 | 1-12 |
| X | JP 3-275758 A (IDEMITSU KOSAN CO., LTD.) 06 December 1991 (1991-12-06) claims, page 3, lower left column to page 5, lower left column, page 6, lower left column to page 7, upper left column, example 65 | 1-2, 4-8, 10-12 |
| A | | 3, 9 |
| A | JP 2013-204119 A (SEIKO EPSON CORP.) 07 October 2013 (2013-10-07) | 1-12 |
| A | JP 2012-151205 A (DAICEL POLYMER LTD.) 09 August 2012 (2012-08-09) | 1-12 |

☒ Further documents are listed in the continuation of Box C.　　☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>13 September 2021 (13.09.2021) | Date of mailing of the international search report<br>21 September 2021 (21.09.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

Form PCT/ISA/210 (continuation of second sheet) (January 2015)

**INTERNATIONAL SEARCH REPORT**

| | International application No. |
|---|---|
| | PCT/JP2021/025806 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-336028 A (NITTA CORP.) 25 November 2004 (2004-11-25) | 1-12 |
| A | JP 2015-109367 A (HITACHI CHEMICAL CO., LTD.) 11 June 2015 (2015-06-11) | 1-12 |
| A | JP 2011-91095 A (BRIDGESTONE CORPORATION) 06 May 2011 (2011-05-06) | 1-12 |
| P, A | JP 2020-161726 A (ASAHI KASEI CORPORATION) 01 October 2020 (2020-10-01) | 1-12 |

36

## INTERNATIONAL SEARCH REPORT
Information on patent family members

International application No.

PCT/JP2021/025806

| Patent Documents referred in the Report | Publication Date | Patent Family | Publication Date |
|---|---|---|---|
| CN 107964239 A | 27 Apr. 2018 | (Family: none) | |
| JP 3-275758 A | 06 Dec. 1991 | (Family: none) | |
| JP 2013-204119 A | 07 Oct. 2013 | CN 103357870 A TW 201343744 A | |
| JP 2012-151205 A | 09 Aug. 2012 | (Family: none) | |
| JP 2004-336028 A | 25 Nov. 2004 | JP 2009-278137 A | |
| JP 2015-109367 A | 11 Jun. 2015 | (Family: none) | |
| JP 2011-91095 A | 06 May 2011 | (Family: none) | |
| JP 2020-161726 A | 01 Oct. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020036389 A
- JP 2012134463 A
- JP 2004336028 A
- JP 2016021490 A
- JP 2000243615 A
- JP 2020119367 A